# EUROPEAN PATENT APPLICATION

(11) **EP 4 373 153 A1**
(43) Date of publication of application: **22.05.2024**
(21) Application number: 22851915.3
(22) Date of filing: 21.07.2022
(51) Int. Cl.: H04W 24/08

(54) **COMMUNICATION METHOD AND COMMUNICATION APPARATUS**

(30) Priority: 31.07.2021 CN 202110876793
(71) Applicant: Huawei Technologies Co., Ltd., Shenzhen, Guangdong 518129 (CN)
(72) Inventor: LI, Yiran, Shenzhen, Guangdong 518129 (CN); SHAO, Jiafeng, Shenzhen, Guangdong 518129 (CN); YU, Jian, Shenzhen, Guangdong 518129 (CN); ZHAO, Wenqi, Shenzhen, Guangdong 518129 (CN)
(74) Representative: Maiwald GmbH
(86) International application number: PCT/CN2022/107012
(87) International publication number: WO 2023/011201

(57) **Abstract**

This application discloses a communication method and a communication apparatus, and may be applied to the field of communication and sensing technologies. The method includes: A first terminal device measures a second signal received on X1 first resources, and sends a measurement result to a network device, where the second signal includes an echo signal of a first signal, and the first signal is a signal sent by the first terminal device; and the measurement result indicates signal quality indication information of the second signal on Y1 first resources, and Y1 is greater than or equal to 1, and is less than or equal to X1. Similar to the first terminal device, another terminal device may also report a measurement result on a corresponding resource to the network device. In this way, the network device can predict, based on the measurement result, a candidate resource to be used by each terminal device. In this manner, the network device may allocate a resource with good sensing performance to each terminal device, to improve accuracy of sensing a target object by the terminal device.

## Description

### CROSS-REFERENCE TO RELATED APPLICATIONS

This application claims priority to Chinese Patent Application No. 202110876793.3, filed with the China National Intellectual Property Administration on July 31, 2021 and entitled "COMMUNICATION METHOD AND COMMUNICATION APPARATUS", which is incorporated herein by reference in its entirety.

### TECHNICAL FIELD

This application relates to the fields of communication and sensing technologies, and in particular, to a communication method and a communication apparatus.

### BACKGROUND

A plurality of terminal devices having a sensing function may reuse a resource allocated by a network device to perform target sensing. This may cause mutual interference between the plurality of terminal devices. If the plurality of terminal devices interfere with each other, each terminal device may not be able to accurately sense a speed, a posture, and the like of a target object, which reduces driving safety of the target object. Especially, in a scenario in which terminal devices are densely deployed, interference between the terminal devices is more severe. Therefore, how to reduce or suppress the interference between the terminal devices to improve accuracy of sensing the target object by the terminal device is an urgent problem that needs to be resolved.

### SUMMARY

This application provides a communication method and a communication apparatus, to reduce or avoid interference between terminal devices as much as possible, and improve accuracy of sensing a target object by a terminal device.

According to a first aspect, a communication method is provided. The method may be performed by a first communication apparatus. The first communication apparatus may be a communication device, for example, a terminal device, or may be a communication apparatus, for example, a chip system that can support the communication device in implementing a function required by the method. The following describes an example in which the communication device is a first terminal device having a sensing function. The method includes the following steps.

The first terminal device measures a second signal received on X1 first resources, and sends a measurement result to a network device. The second signal includes an echo signal of a first signal, and the first signal is a signal sent by the first terminal device. The measurement result indicates signal quality indication information of the second signal on Y1 first resources. Y1 is greater than or equal to 1, and the Y1 first resources belong to the X1 first resources. In this solution, the first terminal device may measure the second signal received on the X1 first resources, to obtain a measurement result of each first resource, and report the measurement result to the network device. Similarly, another terminal device may also report a measurement result of a measured resource to the network device. In this way, the network device can predict, based on the measurement result, a candidate resource to be used by each terminal device. In this manner, the network device may allocate resources with good sensing performance to a plurality of terminal devices, to improve accuracy and precision of sensing a target object by the terminal device. For example, the network device may allocate resources with a low degree of mutual interference to the plurality of terminal devices, to reduce or avoid interference caused between the plurality of terminal devices, so that the sensing performance is improved, in other words, the accuracy of sensing the target object is improved.

In a possible implementation, the signal quality indication information includes one or more of the following: a channel quality indicator, a signal power value, a signal-to-interference ratio, a signal-to-interference plus noise ratio, an interference level, and a sensing detection probability. The sensing detection probability indicates a probability that the first terminal device detects a target. It may be understood that the signal quality indication information is used for representing sensing performance of a resource, to be specific, representing sensing performance of the terminal device on the resource. In addition, a parameter representing the sensing performance of the resource is not limited in this application. Considering the sensing performance of the resource based on a plurality of parameters can further improve the accuracy of sensing the target object.

In a possible implementation, the method further includes the following steps. The first terminal device receives configuration information from the network device. The configuration information indicates X2 second resources allocated to a second terminal device. The X2 second resources partially or completely overlap the X1 first resources, and X2 is greater than or equal to 1. In this solution, the network device may notify the first terminal device that the second terminal device uses the X2 second resources. In this way, it is convenient for the first terminal device to determine, based on the X2 second resources used by the second terminal device, impact on the X1 first resources used by the first terminal device, in other words, determine, based on the X2 second resources used by the second terminal device, the measurement result without depending on the network device.

In a possible implementation, that the measurement result indicates signal quality indication information of the second signal on Y1 first resources includes: The measurement result includes Z1 pieces of pairing information. Each piece of pairing information indicates one of the Y1 first resources and one of Y2 second resources. Y2 is greater than or equal to 1, the Y2 second resources belong to the X2 second resources, and Z 1 is greater than or equal to 1. In this solution, the measurement result reported by the first terminal device to the network device may be a pairing resource, that is, a matched resource pair in the Y1 first resources of the first terminal device and the Y2 second resources of the second terminal device. Each resource pair may be considered as that when the second terminal device uses a second resource in the resource pair, signal quality of a signal sent by the first terminal device using a first resource in the resource pair is high. Therefore, the network device does not need to re-determine the impact of the X2 second resources used by the second terminal device on the X1 first resources used by the first terminal device, to reduce processing complexity of the network device.

In a possible implementation, the method further includes the following steps. The first terminal device receives second indication information from the network device, and sends the first signal on at least one target first resource indicated by the second indication information. The network device may re-allocate, to the first terminal device based on a measurement result of each terminal device to a resource, a target resource used for sending the first signal, to reduce interference from another terminal device to the first terminal device, and improve accuracy of sensing the target object by the first terminal device.

In a possible implementation, that the second indication information indicates at least one target first resource includes: The second indication information includes an identifier of the at least one target first resource.

In a possible implementation, time-frequency resources used by different terminal devices do not overlap. It may be agreed on or configured that the time-frequency resources used by the different terminal devices do not overlap, to reduce mutual interference between the terminal devices as much as possible.

According to a second aspect, a communication method is provided. The method may be performed by a second communication apparatus. The second communication apparatus may be a communication device, for example, a network device, or may be a communication apparatus, for example, a chip system that can support the communication device in implementing a function required by the method. The following describes an example in which the communication device is a network device. The method includes the following steps.

The network device sends first indication information to a first terminal device, receives a measurement result from the first terminal device, and sends second indication information to the first terminal device. The first indication information indicates the first terminal device to measure a second signal received on X1 first resources. The second signal includes an echo signal of a first signal, and the first signal is a signal sent by the first terminal device. The measurement result indicates signal quality indication information of the second signal on Y1 first resources. Y1 is greater than or equal to 1, and the Y1 first resources belong to the X1 first resources. The second indication information indicates at least one target first resource. The at least one target first resource is determined based on the signal quality indication information of the second signal on the Y1 first resources. The at least one target resource is used by the first terminal device to send the first signal.

In a possible implementation, the signal quality indication information includes one or more of the following: a channel quality indicator, a signal power value, a signal-to-interference ratio, a signal-to-interference plus noise ratio, an interference level, and a sensing detection probability. The sensing detection probability indicates a probability that the first terminal device detects a target.

In a possible implementation, the method further includes. The network device sends configuration information to the first terminal device. The configuration information indicates X2 second resources allocated to a second terminal device. The X2 second resources partially or completely overlap the X1 first resources, and X2 is greater than or equal to 1.

In a possible implementation, that the measurement result indicates signal quality indication information of the second signal on Y1 first resources includes: The measurement result includes Z1 pieces of pairing information. Each piece of pairing information indicates one of the Y1 first resources and one of Y2 second resources. Y2 is greater than or equal to 1, the Y2 second resources belong to the X2 second resources, and Z1 is greater than or equal to 1.

In a possible implementation, the method further includes: The network device determines Z2 pieces of pairing information based on the measurement result. Each piece of pairing information indicates one of Y3 first resources and one of Y4 second resources. The Y3 first resources belong to the Y1 first resources, the Y4 second resources belong to the Y2 second resources, and Z2 is greater than or equal to 1.

In a possible implementation, that the second indication information indicates at least one target first resource includes: The second indication information includes an identifier of a first resource indicated by each of the Z2 pieces of pairing information.

In a possible implementation, time-frequency resources used by different terminal devices do not overlap.

For beneficial effects of the second aspect and the implementations thereof, refer to the descriptions of the beneficial effects of the first aspect or the first aspect and the implementations thereof.

According to a third aspect, an embodiment of this application provides a communication apparatus. The communication apparatus has a function of implementing behavior in the method embodiment of the first aspect. For beneficial effects, refer to the descriptions of the first aspect. Details are not described herein again. The communication apparatus may be the first terminal device in the first aspect, or the communication apparatus may be an apparatus, for example, a chip or a chip system that can implement the method provided in the first aspect.

In a possible design, the communication apparatus includes a corresponding means (means) or module configured to perform the method according to the first aspect. For example, the communication apparatus includes: a processing unit (which is sometimes also referred to as a processing module or a processor) and/or a transceiver unit (which is sometimes also referred to as a transceiver module or a transceiver). These units (modules) may perform a corresponding function in the method example of the first aspect. For details, refer to the detailed descriptions in the method example. Details are not described herein again.

According to a fourth aspect, an embodiment of this application provides a communication apparatus. The communication apparatus has a function of implementing behavior in the method instance of the second aspect. For beneficial effects, refer to the descriptions of the second aspect. Details are not described herein again. The communication apparatus may be the network device in the second aspect, or the communication apparatus may be an apparatus, for example, a chip or a chip system that can support the network device in the second aspect in implementing a function required by the method provided in the second aspect.

In a possible design, the communication apparatus includes a corresponding means (means) or module configured to perform the method according to the second aspect. For example, the communication apparatus includes: a processing unit (which is sometimes also referred to as a processing module or a processor) and/or a transceiver unit (which is sometimes also referred to as a transceiver module or a transceiver). These units (modules) may perform a corresponding function in the method example of the second aspect. For details, refer to the detailed descriptions in the method example. Details are not described herein again.

According to a fifth aspect, an embodiment of this application provides a communication apparatus. The communication apparatus may be the communication apparatus in the third aspect or the fourth aspect in the foregoing embodiments, or a chip or a chip system disposed in the communication apparatus in the third aspect or the fourth aspect. The communication apparatus includes a communication interface and a processor, and optionally, further includes a memory. The memory is configured to store a computer program. The processor is coupled to the memory and the communication interface. When the processor reads the computer program or instructions, the communication apparatus performs the method performed by the first terminal device in the foregoing method embodiment, or performs the method performed by the network device in the foregoing method embodiment.

According to a sixth aspect, an embodiment of this application provides a communication apparatus. The communication apparatus includes an input/output interface and a logic circuit. The input/output interface is configured to input and/or output information. The logic circuit is configured to perform the method according to the first aspect, or the logic circuit is configured to perform the method according to the second aspect.

According to a seventh aspect, an embodiment of this application provides a chip system. The chip system includes a processor and may further include a memory and/or a communication interface, and is configured to implement the method according to the first aspect or the second aspect. In a possible implementation, the chip system further includes a memory, configured to store a computer program. The chip system may include a chip, or may include a chip and another discrete component.

According to an eighth aspect, an embodiment of this application provides a communication system. The communication system includes the communication apparatus in the third aspect and the communication apparatus in the fourth aspect. Alternatively, the communication system includes the communication apparatus in the third aspect and the communication apparatus that is in the fifth aspect and that is configured to perform the method according to the second aspect. Alternatively, the communication system includes the communication apparatus in the fourth aspect and the communication apparatus that is in the fifth aspect and that is configured to perform the method according to the first aspect.

According to a ninth aspect, this application provides a computer-readable storage medium. The computer-readable storage medium stores a computer program; and when the computer program is run, the method according to the first aspect or the second aspect is implemented.

According to a tenth aspect, a computer program product is provided. The computer program product includes: computer program code; and when the computer program code is run, the method according to the first aspect or the second aspect is performed.

For beneficial effects of the third aspect to the tenth aspect and the implementations thereof, refer to the descriptions of beneficial effects of the first aspect or the first aspect and the implementations thereof.

### BRIEF DESCRIPTION OF DRAWINGS

FIG. 1 is a schematic diagram of a network architecture to which an embodiment of this application is applicable;
FIG. 2 is a schematic diagram of a pattern of a resource;
FIG. 3 is a schematic diagram of a possible application scenario according to an embodiment of this application;
FIG. 4 is a schematic diagram of interference between a plurality of terminal devices according to an embodiment of this application;
FIG. 5 is a schematic diagram of a system architecture to which an embodiment of this application is applicable;
FIG. 6 is a schematic flowchart of a first communication method according to an embodiment of this application;
FIG. 7 is a schematic diagram of a curve of a sensing detection probability changing with an SNR according to an embodiment of this application;
FIG. 8 is a schematic diagram of measurement results reported by two terminal devices respectively;
FIG. 9 is another schematic diagram of measurement results reported by two terminal devices respectively;
FIG. 10 is a schematic flowchart of a second communication method according to an embodiment of this application;
FIG. 11 is a schematic diagram of patterns of resources used by three terminal devices to send first signals according to an embodiment of this application;
FIG. 12 is a schematic diagram of a structure of a communication apparatus according to an embodiment of this application;
FIG. 13 is a schematic diagram of another structure of a communication apparatus according to an embodiment of this application; and
FIG. 14 is a schematic diagram of a structure of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

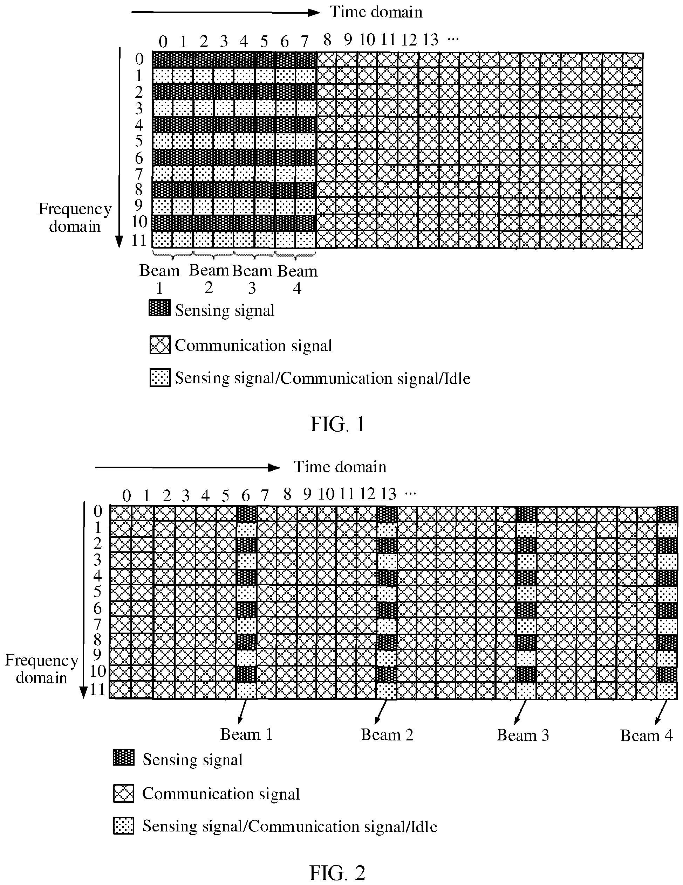

To help a person skilled in the art understand the method provided in embodiments of this application, some terms in embodiments of this application are explained and described first.
(1) A terminal device is a device having a wireless transceiver function, and may send a signal to a network device, or receive a signal from the network device. The terminal device may be referred to as user equipment (user equipment, UE), and sometimes may also be referred to as a terminal, an access station, a UE station, a remote station, a wireless communication device, a user apparatus, or the like. The terminal device is configured to connect a person, an object, a machine, and the like, and may be widely used in various scenarios, including but not limited to the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), remote medical (remote medical), a smart grid (smart grid), smart furniture, a smart office, smart wearables, smart transportation, a smart city (smart city), an uncrewed aerial vehicle, and a robot. The terminal device in embodiments of this application may be a mobile phone (mobile phone), a pad (Pad), a computer with a wireless transceiver function, a VR terminal, an AR terminal, a wireless terminal in the industrial control (industrial control), a wireless terminal in the self driving (self driving), a smart speaker in an IoT network, a wireless terminal device in the remote medical, a wireless terminal device in the smart grid, a wireless terminal device in transportation security, a wireless terminal device in the smart city, a wireless terminal device in a smart home, or the like. By way of example, and not limitation, in embodiments of this application, the terminal device may further be a wearable device. The wearable device may also be referred to as a smart wearable device, a smart wearable device, or the like, and is a general term of wearable devices, for example, glasses, gloves, watches, clothes, and shoes that are intelligently designed and developed for daily wear by using a wearable technology. The terminal device may further include a relay (relay). For example, the terminal device may be customer premise equipment (customer premise equipment, CPE). The CPE may receive a signal from the network device, and forward the signal to another terminal device. Alternatively, it is understood that any device that can perform data communication with a base station may be considered as the terminal device. If various terminal devices described above are located in a vehicle (for example, placed inside the vehicle or installed inside the vehicle), the terminal devices may all be considered as vehicle-mounted terminal devices. For example, the vehicle-mounted terminal devices are also referred to as on-board units (on-board units, OBUs). In addition, in embodiments of this application, the terminal device may be an apparatus configured to implement a function of a terminal, or may be an apparatus, for example, a chip system that can support the terminal device in implementing the function. The apparatus may be installed in the terminal device. For example, the terminal device may alternatively be a vehicle sounder. In embodiments of this application, the chip system may include a chip, or may include a chip and another discrete component. In the technical solutions provided in embodiments of this application, an example in which the apparatus configured to implement the function of the terminal is the terminal device is used for describing the technical solutions provided in embodiments of this application.
(2) A network device is an access device that is used by a terminal device to access a mobile communication system in a wireless manner, for example, includes a radio access network (radio access network, RAN) device, for example, a base station (for example, an access point). The network device may alternatively be a device, for example, another possible terminal apparatus that communicates with a terminal over an air interface. For another example, in a V2X technology, the network device is a road side unit (road side unit, RSU). The base station may be configured to perform mutual conversion between a received over-the-air frame and an internet protocol (internet protocol, IP) packet and serve as a router between the terminal and a remaining part of the radio access network. The remaining part of the radio access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (evolved NodeB) in a long term evolution (long term evolution, LTE) system or a long term evolution-advanced (long term evolution-advanced, LTE-A) system, or may be referred to as an eNB or an e-NodeB for short. Alternatively, the network device may include a next generation NodeB (next generation NodeB, gNB) in a 5G NR system. Alternatively, the network device may include an access node in a wireless-fidelity (wireless-fidelity, Wi-Fi) system. Alternatively, the network device may be a relay station, a vehicle-mounted device and a future evolved public land mobile network (public land mobile network, PLMN) device, a device in a device-to-device (device-to-device, D2D) network, a device in a machine-to-machine (machine-to-machine, M2M) network, a device in an IoT network, or the like. A specific technology and a specific device form that are used by the radio network device are not limited in embodiments of this application. For example, a network device in FIG. 1 may be a base station, and corresponds to different devices in different systems. For example, the network device in FIG. 1 may correspond to an eNB in a fourth generation mobile communication technology (fourth generation, 4G) system, and corresponds to a gNB in a 5G system.

In addition, in embodiments of this application, the base station may include a central unit (central unit, CU) and a distributed unit (distributed unit, DU), and a plurality of DUs may be centrally controlled by one CU. The CU and the DU may be divided based on a protocol layer function of a wireless network that the CU and the DU each have. For example, functions of a packet data convergence protocol (packet data convergence protocol, PDCP) layer and a protocol layer above the PDCP layer are set on the CU, and functions of a protocol layer below the PDCP layer, such as a radio link control (radio link control, RLC) layer and a medium access control (medium access control, MAC) layer, are set on the DU. It should be noted that, such division of protocol layers is merely an example, and there may be division of other protocol layers. A radio frequency apparatus may not be disposed in the DU but is disposed remotely from the DU, may be integrated into the DU, or the radio frequency apparatus partially is disposed remotely from the DU and partially is integrated into the DU. This is not limited in embodiments of this application. In addition, in some embodiments, a control plane (control plane, CP) and a user plane (user plane, UP) of the CU may be further separated and implemented by different entities, including a control plane CU entity (CU-CP entity) and a user plane CU entity (CU-UP entity) respectively. In the network architecture, signaling generated by the CU may be sent to the terminal device via the DU, or signaling generated by the UE may be sent to the CU via the DU. The DU may transparently transmit the signaling to the UE or the CU by directly encapsulating the signaling at a protocol layer without parsing the signaling. In the network architecture, the CU is used as a network device on a RAN side. In addition, the CU may alternatively be used as a network device on a core network (core network, CN) side. This is not limited in this application.

The network device may further include a core network device. The core network device includes, for example, an access and mobility management function (access and mobility management function, AMF), a user plane function (user plane function, UPF), or the like. Because embodiments of this application mainly relate to an access network device, the network device below is an access network device unless otherwise specified.

In embodiments of this application, an apparatus configured to implement a function of the network device may be a network device, or may be an apparatus, for example, a chip system that can support the network device in implementing the function. The apparatus may be installed in the network device. In the technical solutions provided in embodiments of this application, an example in which the apparatus configured to implement the function of the network device is the network device is used for describing the technical solutions provided in embodiments of this application.

(3) A sensing device may be referred to as a sensing apparatus, or may also be referred to as a sounder or the like, or may further be referred to as a terminal device having a sensing function. A working principle of the sensing device is that: The sensing device sends a signal and receives a signal (which is also referred to as an echo signal) generated by reflecting the sent signal by a sensed object, to determine attribute information of the sensed object, for example, a speed, a distance, a shape, and a size that are of the sensed object. The sensed object may be a fixed object, for example, a mountain, a forest, or a building, or may be a removable object, for example, a vehicle, an unmanned aerial vehicle, a pedestrian, or a terminal device. In embodiments of this application, the sensing device may refer to an apparatus configured to implement a sensing function, or may be an apparatus, for example, a chip system that can support the terminal device in implementing the function. The sensing device may be installed in the terminal device. For example, the terminal device may alternatively be a vehicle sounder or a sensor in a gas station. In embodiments of this application, the terminal device includes an apparatus having a sensing function, and may be replaced with the sensing device. Unless otherwise specified, the sensing device and the terminal device below have a same meaning.

(4) A sensing signal is a signal that is sent by a terminal device and that is used for sensing a sensed object (which is also referred to as a target object). The sensing signal is also referred to as a sounding signal, a radar signal, a radar sensing signal, a radar sounding signal, an environment sensing signal, or the like. The sensing signal may be a pulse signal, or may be a possible signal in a wireless communication system, for example, a sounding reference signal (sounding reference signal, SRS), a demodulation reference signal (demodulation reference signal, DMRS), or a channel state information reference signal (channel state information reference signal, CSI-RS). In comparison with the sensing signal, a signal transmitted between the network device and the terminal device may be considered as a communication signal, for example, a signal carried on a physical downlink shared channel (physical downlink shared channel, PDSCH).

(5) A resource includes a time domain resource, a frequency domain resource, and a space domain resource, and may be considered as a resource pair formed by the time domain resource, the frequency domain resource, and the space domain resource. The time domain resource refers to an orthogonal frequency division modulation (orthogonal frequency division modulation, OFDM) symbol occupied in time domain. A minimum granularity of the time domain resource is not limited in embodiments of this application. For example, the minimum granularity of the time domain resource is one OFDM symbol, or may be a mini-slot (mini-slot), a slot (slot), or the like. One mini-slot may include two or more OFDM symbols, and one slot includes 14 OFDM symbols.

The frequency domain resource refers to a frequency resource occupied in frequency domain. A minimum granularity of frequency domain resource may be one subcarrier or a resource element (resource element, RE), or may be a physical resource block (physical resource block, PRB), a resource block group (resource block group, RBG), or the like. One PRB includes 12 REs in frequency domain, and one RBG may include 2 PRBs, 4 PRBs, 8 PRBs, or 16 PRBs.

The space domain resource may also be referred to as a beam, and the beam may be classified into a transmit beam and a receive beam. The transmit beam refers to strength distribution of signals formed in different directions in space after a signal is transmitted via an antenna. The receive beam refers to strength distribution of signals received from an antenna in different directions in space. One beam may include one or more antenna ports. Different beams may be considered as different resources.

The network device may allocate, to a terminal device, a resource used for sending a sensing signal and a resource used for sending a communication signal. In other words, the terminal device may send the sensing signal and/or the communication signal on the resources allocated by the network device. That the terminal device sends the sensing signal on the resource is actually sending a sensing signal carrying a plurality of beams, to perform beam scanning in a plurality of directions. On the time domain resource, one beam may correspond to some symbols of one slot. Symbols corresponding to different beams may be consecutive, or may be spaced. For example, FIG. 1 is a schematic diagram of a pattern of a resource. In FIG. 1, an example in which the symbols corresponding to the different beams are consecutive is used. Alternatively, it may be considered that symbols corresponding to a plurality of beams are distributed in a centralized manner. In FIG. 1, an example in which four beams are included is used. The four beams are a beam 1, a beam 2, a beam 3, and a beam 4. The beam 1, the beam 2, the beam 3, and the beam 4 each correspond to two symbols in time domain, and symbols corresponding to adjacent beams in time domain are consecutive. Each beam is transmitted in a comb form in frequency domain. As shown in FIG. 1, the terminal device may perform beam scanning in a sequence of the beam 1, the beam 2, the beam 3, and the beam 4, to sense a target object. For another example, FIG. 2 is a schematic diagram of another pattern of a resource. A difference from FIG. 1 lies in that, FIG. 2 uses an example in which the symbols corresponding to the different beams are spaced. Alternatively, it may be considered that symbols corresponding to a plurality of beams are not distributed in a centralized manner.

(6) Terms "system" and "network" in embodiments of this application may be used interchangeably. "At least one" means one or more, and "a plurality of" means two or more. A term "and/or" is an association relationship for describing associated objects and represents that three relationships may exist. For example, A and/or B may represent three cases: Only A exists, both A and B exist, and only B exists, where A and B may be singular or plural. A character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are used for distinguishing between a plurality of objects, but are not intended to limit an order, a time sequence, priorities, or importance of the plurality of objects. For example, a first resource and a second resource are merely used for distinguishing between different resources, but do not indicate a difference between priorities, importance, or the like of the two resources.

The foregoing describes some concepts involved in embodiments of this application, and the following describes technical characteristics in embodiments of this application.

A terminal device having a sensing function can sense an environment around a target object, and therefore is widely used in various monitoring fields. For example, the terminal device may be applied to air and ground traffic monitoring, weather monitoring, security monitoring, electromagnetic imaging, and the like. For example, the terminal device can monitor aerial unmanned aerial vehicles. The terminal device can monitor a speed of a vehicle, whether a vehicle occupies an emergency lane, and whether a vehicle changes a lane in violation of regulations.

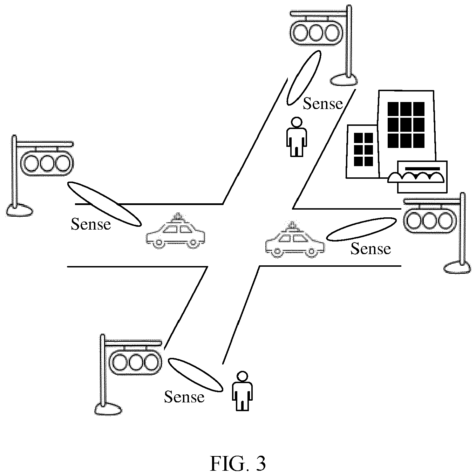

For example, FIG. 3 is a schematic diagram of a possible application scenario according to an embodiment of this application. In FIG. 3, an example in which a sensing device is applied to ground traffic monitoring and the sensing device is installed on a signal light is used. In FIG. 3, an example in which four signal lights are included is used. Beam scanning may be performed on each signal light, in other words, a sensing signal is sent. Subsequently, the signal light receives an echo signal through reflection of the sensing signal by a target object (for example, a vehicle or a pedestrian in FIG. 1), to determine attribute information, for example, a speed and a direction that are of the target object by using the sensing signal and the echo signal. It should be noted that, FIG. 3 shows merely an example in which this embodiment of this application is applicable to sensing between vehicles. However, this embodiment of this application is not limited to being applied to the sensing between vehicles. For example, this embodiment of this application may also be applicable to sensing between a vehicle and an unmanned aerial vehicle or sensing between other apparatuses.

A resource used by a terminal device to send the sensing signal may be allocated by a network device. In a possible scenario, the resource allocated by the network device to the terminal device is also used by another device. If resources used by the terminal device and another terminal device partially or completely overlap, mutual interference may be generated between the terminal device and another terminal device. Another terminal device may be a terminal device having a sensing capability, or may be a terminal device having no sensing capability.

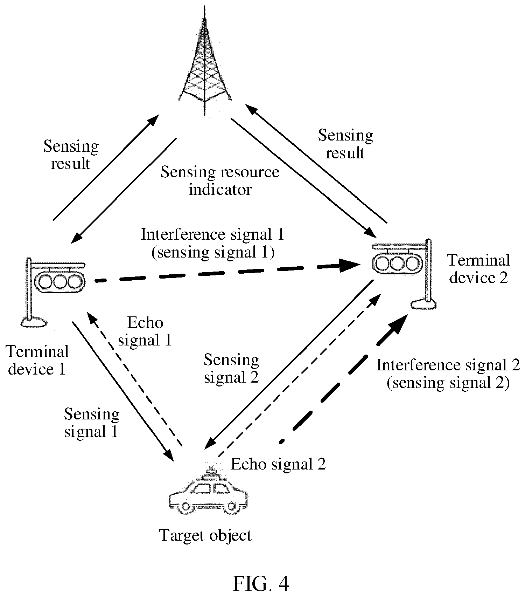

For example, FIG. 4 is a schematic diagram of mutual interference between a plurality of terminal devices. In FIG. 4, one network device, two terminal devices (for example, a terminal device 1 and a terminal device 2), and a target object are included. In FIG. 4, the terminal device 1 may send a sensing signal 1, and receive a signal reflected by the target object, that is, an echo signal 1. Similarly, the terminal device 2 may send a sensing signal 2, and receive a signal reflected by the target object, that is, an echo signal 2. The network device may send a sensing resource indicator to the terminal device 1, where the sensing resource indicator indicates a first resource for sending the sensing signal 1. Alternatively, the network device may send a sensing resource indicator to the terminal device 2, where the sensing resource indicator indicates a second resource for sending the sensing signal 2. If the first resource and the second resource partially or completely overlap, the sensing signal 1 sent by the terminal device 1 on the first resource may be received by the sensing device 2. For the terminal device 2, when sending the sensing signal 2 on the second resource, the terminal device 2 should receive the echo signal 2. If the terminal device 2 receives the sensing signal 1 in addition to the echo signal 2, it is clear that the sensing signal 1 is an interference signal (for example, the interference signal 1 in FIG. 4) for the terminal device 2. Similarly, the terminal device 1 should receive the echo signal 1. If the terminal device 1 further receives the sensing signal 2, the sensing signal 2 is an interference signal (for example, the interference signal 2 in FIG. 4) for the terminal device 1. Mutual interference between terminal devices reduces accuracy of sounding the target object by the terminal devices, in other words, reduces sensing performance of the terminal devices. As shown in FIG. 4, if the terminal device 1 and the terminal device 2 interfere with each other, a speed, distance, and the like that are of the target object may not be accurately determined, and the sensing performance is poor. Especially, in a scenario in which terminal devices are densely deployed, interference between the terminal devices is more severe, and consequently, sensing performance of the terminal devices is poorer. Therefore, how to reduce or suppress the interference between the terminal devices is an urgent problem that needs to be resolved.

In view of this, an embodiment of this application provides a communication method. In the method, each terminal device may measure echo signals received on a plurality of resources, to obtain a measurement result of each resource, and report the measurement result to a network device. The network device may predict, based on the measurement result, a candidate resource on which each terminal device performs target sensing. In this manner, the network device may allocate resources with a low degree of mutual interference to the plurality of terminal devices, to reduce or avoid interference between the plurality of terminal devices, so that accuracy of sensing the target object is improved.

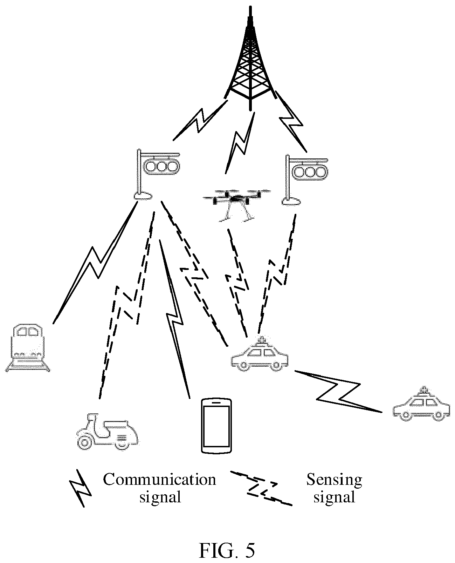

The solutions provided in embodiments of this application may be applied to a communication system including a sensing device. For example, FIG. 5 is a schematic diagram of a system architecture to which an embodiment of this application is applicable. The foregoing application scenario may be self driving, autonomous driving, smart driving, networked driving, or the like. The system shown in FIG. 5 includes a network device, a sensing device, and a common terminal device. The common terminal device is relative to the sensing device, and the common terminal device does not have a sensing capability. The sensing device may be installed on a mobile device, for example, installed on a motor vehicle (for example, an unmanned vehicle, a smart vehicle, an electric vehicle, or a digital vehicle), an unmanned aerial vehicle, a track vehicle, a bicycle, a speed measurement apparatus, or a terminal device. The sensing device may alternatively be installed on a fixed device, for example, installed on a device such as an RSU or a signal light. An installation position, a function, and the like that are of the sensing device are not limited in embodiments of this application. As shown in FIG. 3, an example in which the sensing device is installed on a signal light or an unmanned aerial vehicle is used. Both the sensing device and the common terminal device may be terminal devices.

The following describes in detail the solutions provided in embodiments of this application with reference to the accompanying drawings. In the following description process, an example in which the method is applied to the sensing scenario shown in FIG. 3 or FIG. 5 is used. In addition, the method may be performed by two communication apparatuses. For example, the two communication apparatuses are a first communication apparatus and a second communication apparatus. The first communication apparatus may be a terminal device having a sensing capability or a communication apparatus that can support the terminal device in implementing a function required by the method, or certainly may further be another communication apparatus, for example, a chip system. The second communication apparatus may be a network device, or a communication apparatus that can support the network device in implementing a function required by the method, or certainly may further be another communication apparatus, for example, a chip system. Implementations of the first communication apparatus and the second communication apparatus are not limited. For example, the first communication apparatus may be the terminal device having the sensing capability, and the second communication apparatus is the network device. Alternatively, the first communication apparatus is the communication apparatus that can support the terminal device in implementing the function required by the method, and the second communication apparatus is the network device.

For ease of description, the following uses an example in which the method is performed by the first terminal device and the network device, in other words, an example in which the first communication apparatus is the first terminal device and the second communication apparatus is the network device is used. If this embodiment is applied to the network architecture shown in FIG. 5, the first terminal device described below may be a terminal device in the network architecture shown in FIG. 5, for example, a traffic light or a road side unit, and the first terminal device has the sensing capability. It should be noted that, this embodiment of this application is merely performed using the first terminal device and the network device as an example, and is not limited to one terminal device. For example, this embodiment of this application may alternatively be performed using more terminal devices, and the plurality of terminal devices may include a terminal device having a sensing capability. For example, this embodiment of this application may be performed using the first terminal device, the second terminal device, and the network device, and both the first terminal device and the second terminal device have sensing capabilities. It should be understood that, when the more terminal devices are involved, all terminal devices in the more terminal devices perform a same procedure. For ease of description, the following uses the first terminal device as an example, and the second terminal device is similar to the first terminal device.

In this embodiment of this application, the first terminal device may measure a signal received on a to-be-used resource, and report a measurement result to the network device. The network device may reallocate, based on the measurement result and in combination with a resource allocated to another terminal device (for example, the second terminal device), a resource to the first terminal device, to improve sensing performance of the terminal device. In this specification, unless otherwise specified, a meaning of measuring the signal received on the resource is the same as that of measuring the signal on the resource.

In a possible scenario (for example, which is referred to as a first scenario), the first terminal device does not need to pay attention to a resource used by another terminal device. In this scenario, the measurement result reported by the first terminal device to the network device may represent sensing performance of each resource used by the first terminal device. In another possible scenario (for example, which is referred to as a second scenario), the first terminal device may learn of the resource used by another terminal device. In this scenario, the measurement result reported by the first terminal device to the network device may represent the sensing performance of each resource used by the first terminal device when another terminal device uses each resource. In this specification, the sensing performance of the resource may alternatively be considered as performance of sensing (or sounding or detecting) a target object by a terminal by using the resource.

The following describes the technical solutions provided in embodiments of this application for the two possible scenarios.

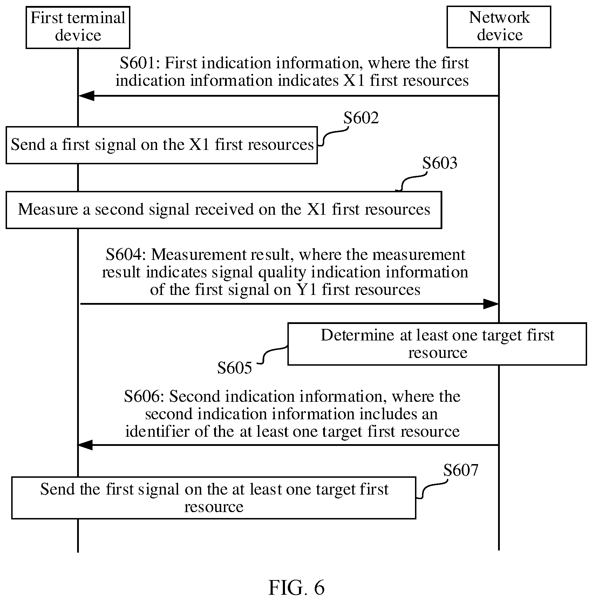

FIG. 6 is a schematic flowchart of an interference coordination method according to an embodiment of this application. An example in which the procedure is applied to the first scenario is used.

S601: A network device sends first indication information to a first terminal device, and correspondingly, the first terminal device receives the first indication information. The first indication information indicates X1 first resources.

The X1 first resources are resources configured by the network device for the first terminal device. The X1 first resources may be used by the first terminal device to send a first signal, and the first signal may be used for sensing a target object. A specific name of the first signal is not limited in this embodiment of this application. For example, the first signal may be the foregoing sensing signal.

The first indication information may be carried in one or more of the following: radio resource control (radio resource control, RRC) signaling, media access control control element (media access control control element, MAC CE) signaling, downlink control information (downlink control information, DCI) signaling, or the like. One or more fields described above may be a field defined in the RRC signaling, a field defined in the MAC CE signaling, or a field defined in the DCI signaling, or may be a field newly defined in at least one piece of signaling described above. It may be understood that the first indication information may alternatively be carried in a piece of newly defined signaling. This is not limited in this embodiment of this application.

Each of the X1 first resources configured by the network device for the first terminal device includes a time-frequency resource and a space domain resource (which is referred to as a beam for short in this specification). Correspondingly, the first indication information may include one or more types of the following information: space domain information of the resource, time-frequency domain information of the resource, a periodicity of the resource, a time offset of the resource, duration of the resource, and the like. An implementation form of the first indication information varies based on different first signals.

For example, the first signal is a CSI-RS, and the first indication information may reuse some information elements (information elements, IEs) of CSI-RS resource configurations to indicate the resource allocated to the first terminal device. For example, the first indication information may include a CSI-RS resource identifier (identifier, ID). The CSI-RS resource ID may be used as a beam ID. Another information element of the CSI-RS resource configuration may indicate information such as a time-frequency resource mapping configuration, a resource periodicity configuration, and resource duration that are configured for the first terminal device, to indicate a time-frequency resource allocated to the first terminal device.

For example, the first signal is an SRS, and the first indication information may reuse some IEs of SRS resource configurations to indicate the resource allocated to the first terminal device. For example, the first indication information may include one or more SRS resource set IDs. The SRS resource set ID may also be used as a beam ID. Another information element of the SRS resource configuration may also indicate information such as a time-frequency resource mapping configuration, a resource periodicity configuration, and resource duration that are configured for the first terminal device, to indicate a time-frequency resource allocated to the first terminal device.

S602: The first terminal device sends the first signal on the X1 first resources.

The first terminal device receives the first indication information, and may send the first signal on the X1 first resources, to sense the target object. In practice, there may be one or more other terminal devices adjacent to the first terminal device. If resources used by the other terminal devices and the X1 first resources used by the first terminal device partially or completely overlap, the other terminal devices may cause interference to the first terminal device, and consequently, the first terminal device cannot accurately sense the target object. Therefore, in this embodiment of this application, the first terminal device may measure the used X1 first resources in advance, to determine sensing performance of each of the X1 first resources. Therefore, the target object is subsequently sensed using a resource with good sensing performance, to improve accuracy of a sensing result.

S603: The first terminal device measures a second signal received on the X1 first resources. The second signal includes an echo signal of the first signal.

That the first terminal device measures the X1 first resources is actually that the first terminal device measures the second signal received on the X1 first resources. If a distance between the first terminal device and the target object is short, the first terminal device sends the first signal on the X1 first resources, and the echo signal of the first signal is also received on the X1 first resources. In other words, the second signal may include the echo signal of the first signal. Considering that another device may send signals by using a time-frequency resource that is the same as that of the X1 first resources, these signals may be considered as interference signals for the echo signal of the first signal. Therefore, the second signal may further include an interference signal. The interference signal may include a signal from the network device, or may include a signal from another terminal device. In other words, in addition to the echo signal of the first signal, the second signal further includes the signal from the network device and/or the another terminal device. The interference signal may include a signal generated when the another terminal device communicates with the network device, or may include a sensing signal sent by the another terminal device. This is not limited in embodiments of this application.

It should be noted that, S602 is described using an example in which the first terminal device sends the first signal. If the first terminal device does not send the first signal on the X1 first resources, the second signal does not include the echo signal of the first signal. In other words, after the network device allocates the X1 first resources to the first terminal device, the first terminal device does not send the first signal on the X1 first resources. Subsequently, the first terminal device measures the second signal received on the X1 first resources. In this case, the second signal may include the interference signal, and does not include the echo signal of the first signal.

It should be further noted that, S602 and S603 are described by using an example in which the distance between the first terminal device and the target object is short, to be specific, an example in which a resource for sending the first signal is the same as a resource for receiving the echo signal of the first signal. In other words, the first terminal device sends the first signal on the X1 first resources, and the first terminal device receives the second signal on the X1 first resources. However, if the distance between the first terminal device and the target object is long, an interval between a time point of sending the first signal and a time point of receiving the second signal is long. In other words, a time-frequency resource for sending the first signal may be different from a time-frequency resource for receiving the echo signal of the first signal. For example, the first terminal device sends the first signal on the X1 first resources, and may receive the echo signal of the first signal on a third resource. In other words, the first terminal device sends the first signal on the X1 first resources, and measures a second signal received on X1 third resources.

The first terminal device does not learn of whether the distance between the first terminal device and the target object is short or long, in other words, the first terminal device does not learn of a resource on which the second signal is received. Therefore, the first terminal device needs to determine a resource for receiving the second signal. In a possible implementation, the network device may notify the first terminal device of the resource for receiving the second signal. To be specific, before S603, the network device may send third indication information to the first terminal device. The third indication information may indicate the resource used by the first terminal device to receive the second signal. For example, if the resource used by the first terminal device to receive the second signal is the first resource, the third indication information indicates the first resource. For another example, if the resource used by the first terminal device to receive the second signal is the third resource, the third indication information indicates the third resource. It should be understood that, if the first terminal device is close to the target object, the resource used by the first terminal device to send the first signal and the resource used by the first terminal device to receive the second signal are a same resource. In this case, it may be agreed on that if the network device does not send the third indication information to the first terminal device, in other words, the first terminal device does not receive the third indication information, the resource used by the first terminal device to receive the second signal may be considered as the first resource by default. Alternatively, a first correspondence may be predefined. The first correspondence is a correspondence between the resource used by the first terminal device to send the first signal and the resource used by the first terminal device to receive the second signal. In this case, without an indication of the network device, the first terminal device may determine, based on the first correspondence and the first resource, that the resource used by the first terminal device to receive the second signal is the first resource or the third resource. Alternatively, the first correspondence may be a correspondence between a power of sending the first signal by the first terminal device and the resource used by the first terminal device to receive the second signal. For example, if the power is less than or equal to a threshold, the resource of the second signal is the first resource; otherwise, the resource of the second signal is the third resource.

There are a plurality of implementations in which the third indication information indicates the resource used by the first terminal device to receive the second signal. The following uses an example in which the third indication information indicates that the resource used by the first terminal device to receive the second signal is the third resource to describe how the third indication information indicates the third resource.

The third indication information may indicate the third resource in a direct manner. Alternatively, the third indication information may indicate a parameter of the resource used by the first terminal device to receive the echo signal of the first signal, and the parameter of the resource indicates the third resource. For example, the parameter of the resource includes a time domain position of the third resource and a frequency domain position of the third resource. After receiving the third indication information, the first terminal device may determine the third resource based on the parameter of the resource indicated by the third indication information. Alternatively, the third indication information indicates a correspondence between the first resource and the third resource. The first terminal device receives the third indication information, and may also determine the third resource based on the first resource and the correspondence indicated by the third indication information. The following describes an example in which the distance between the first terminal device and the target object is short, in other words, an example in which the third resource is the first resource.

The first terminal device determines that the resource for receiving the second signal is the X1 first resources, and measures the second signal received on the X1 first resources. Apurpose of measuring the second signal received on the X1 first resources is to determine sensing performance of the X1 first resources based on some parameters of the second signal. Sensing performance of a resource may be represented using signal quality of a signal received by the resource. To be specific, the sensing performance of the first resource may be represented using signal quality of the second signal received on the first resource. In addition, the signal quality of the second signal may be represented using one or more signal quality parameters. For example, the signal quality of the second signal may be represented using a degree of interference of the second signal. If the degree of the interference of the second signal is high, relatively speaking, the signal quality of the second signal is low, and the sensing performance of the first resource for receiving the second signal is poor. For another example, the signal quality of the second signal may be represented using a sensing detection probability of the second signal. If the sensing detection probability of the second signal is large, relatively speaking, the signal quality of the second signal is high, and the sensing performance of the first resource for receiving the second signal is good.

In a possible implementation, the network device may perform measurement configuration for the X1 first resources. The first terminal device may measure the X1 first resources based on a measurement configuration indicated by the network device. For example, if a degree of interference of some of the X1 first resources is stable, sensing performance of the some resources does not need to be measured, to reduce power consumption of the first terminal device.

For example, the network device may send measurement indication information to the first terminal device. The measurement indication information indicates a measurement configuration of the X1 first resources. The measurement indication information and the first indication information may be carried in same signaling, or may be carried in different signaling. An example in which the measurement indication information is carried in RRC signaling is used. The network device may represent the measurement indication information by using an object measured by a terminal device. For example, one information element may be newly added to a list of objects measured by the terminal device (MeasObjectToAddModList) to indicate the measurement indication information. For example, a first information element, for example, "MeasObjectSENSE IE" is newly added to MeasObjectToAddModList. "MeasObjectSENSE IE" may include a measurement configuration parameter, for example, information such as an ID of a measured resource and a time-frequency resource configuration of the resource. The first terminal device obtains "MeasObjectSENSE IE", and measures the X1 first resources based on content included in "MeasObjectSENSE IE". It should be noted that, the foregoing "MeasObjectToAddModList IE" and "MeasObjectSENSE IE" are merely examples. Specific names of these information elements are not limited in embodiments of this application.

The first terminal device may measure one or more characteristic parameters of the second signal, to obtain a measurement result. The measurement result may indicate signal quality indication information of the second signal on the X1 first resources. It may alternatively be considered that the measurement result may indicate the sensing performance of each of the X1 first resources.

In an example, the first terminal device may measure the signal quality of the second signal received on the X1 first resources. An example in which one first resource is measured is used, the first terminal device may measure a signal power of a second signal received on the first resource. The signal power may be understood as a power of a received echo signal. The measurement result of the first resource may include a signal power value corresponding to the second signal received on the first resource. The first terminal device may also measure signal strength of the second signal received on the first resource. The signal strength may be understood as a sum of powers such as a power of an echo signal, a power of an interference signal, and/or a power of noise. The measurement result of the first resource may include the signal strength corresponding to the second signal received on the first resource. The first terminal device may also measure a signal-to-interference ratio (signal-to-interference ratio, SIR) of the second signal received on the first resource. The measurement result of the first resource may include an SIR corresponding to the first resource. The first terminal device may alternatively measure a signal-to-interference plus noise ratio (signal-to-interference plus noise ratio, SINR) of the second signal received on the first resource. The measurement result of the first resource may include an SINR corresponding to the first resource. The first terminal device may also measure a signal-to-noise ratio (signal-to-noise ratio, SNR) of the second signal received on the first resource. The measurement result of the first resource may include an SNR corresponding to the first resource.

In some embodiments, the measurement result of the first resource may be an interference level. The interference level may be determined based on one or more of the following: the signal strength, the signal power value, the SIR, the SNR, and the SINR of the second signal. For example, the interference level may be determined based on the signal strength and the signal power value. A degree of interference may be reflected using the signal power value and the signal strength. The degree of the interference may be represented as (signal strength - signal power value)/signal strength, or the degree of the interference may be represented as signal power/(signal strength - signal power value). Further, the degree of the interference may be classified into N levels in descending order, where N is an integer greater than 1. For example, the degree of the interference obtained according to the foregoing manner is within a first value range, and a corresponding interference level is a first level. The degree of the interference obtained according to the foregoing manner is within a second value range, and a corresponding interference level is a second level, and so on. A measurement result of one first resource may also include an interference level corresponding to a degree of interference obtained according to the foregoing manner by the second signal received on the first resource. A higher interference level indicates poorer sensing performance. To be specific, sensing performance of an interference level X is poorer than sensing performance of an interference level X-1. Alternatively, a higher interference level indicates better sensing performance. To be specific, sensing performance of an interference level X is better than sensing performance of an interference level X-1. Similarly, the degree of the interference may be classified into N levels in descending order based on the SIR, where N is an integer greater than 1. For example, the SIR is within a first value range, and a corresponding interference level is a first level. The SIR is within a second value range, and a corresponding interference level is a second level, and so on. In this case, the measurement result of the first resource may also include an interference level corresponding to an SIR of the second signal received on the first resource. Similarly, the first terminal device measures an SNR of the second signal received on each first resource. The measurement result of the first resource may include the SNR, and may also include an interference level corresponding to the SNR of the second signal received on the first resource. The first terminal device measures an SINR of the second signal received on each first resource. The measurement result of the first resource may include the SINR, and may also include an interference level corresponding to the SINR of the second signal received on the first resource.

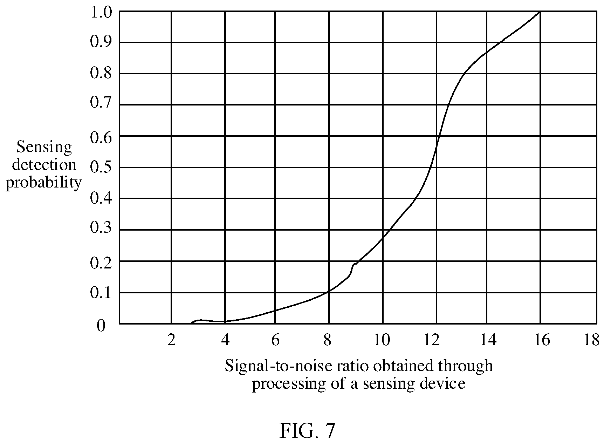

In another example, the first terminal device may measure a probability that the first terminal device detects the target object on the X1 first resources, that is, a sensing detection probability. In this case, a measurement result of each first resource may include a corresponding sensing detection probability, or may include a sensing channel quality indicator. The sensing channel quality indication information indicates a performance level of target sounding performed by a sensing signal. The sensing channel quality indicator may be represented using a curve of a sensing detection probability changing with an SNR. For example, sensing quality may be classified into N levels based on a degree to which the sensing detection probability changes with the SNR, where N is an integer greater than or equal to 1. A higher sensing channel quality level indicates a larger sensing detection probability and better sensing performance. For example, a sensing detection probability of a sensing channel quality level X is larger than a sensing detection probability of a sensing channel quality level X-1, and sensing performance of the sensing channel quality level X is better than sensing performance of the sensing channel quality level X-1. Alternatively, a higher sensing channel quality level indicates a smaller sensing detection probability and poorer sensing performance. For example, a sensing detection probability of a sensing channel quality level X is smaller than a sensing detection probability of a sensing channel quality level X-1, and sensing performance of the sensing channel quality level X is poorer than sensing performance of the sensing channel quality level X-1. For example, FIG. 7 is a schematic diagram of a curve of a sensing detection probability changing with an SNR. The sensing detection probability is divided at an interval of 0.1. Different sensing detection probability ranges correspond to different SNR ranges. Each SNR range may correspond to one sensed channel quality level. For example, a correspondence between an SNR range and a sensing channel quality level is shown in table 1. It should be noted that, a correspondence between a value range of an SNR and a level in table 1 is merely an example.

**Table 1**

| Index of a sensing channel quality level | SNR (dB) |
|---|---|
| 0 | <3 |
| 1 | 3 to 8 |
| 2 | 8 to 9 |
| 3 | 9 to 10 |
| 4 | 10 to 11 |
| 5 | 11 to 11.5 |
| 6 | 11.5 to 12 |
| 7 | 12 to 12.5 |
| 8 | 12.5 to 13 |
| 9 | 13 to 14 |
| 10 | 14 to 16 |
| 11 | >16 |

S604: The first terminal device sends a measurement result to the network device. The measurement result indicates signal quality indication information of the second signal on Y1 first resources.

After obtaining the measurement results of the X1 first resources, the first terminal device may send the measurement results of the X1 first resources to the network device, or may send measurement results of some of the X1 first resources to the network device. For example, the first terminal device may report a first resource with a low interference level to the network device. For a first resource corresponding to a measurement result that is not reported to the network device, it may be considered by default that sensing performance is poor. For example, the first resource corresponding to the measurement result that is not reported to the network device may be a resource with a high degree of interference. For ease of description, the following describes an example in which the first terminal device sends the measurement results of the Y1 first resources to the network device. It should be understood that Y1 is greater than or equal to 1, and is less than or equal to X1. In other words, the Y1 first resources belong to the X1 first resources, or the X1 first resources include the Y1 first resources. The measurement results of the Y1 first resources may include one or more of the following: a signal power value, an SIR, an SNR, an SINR, an interference level, signal strength, a sensing detection probability, or a sensing channel quality level corresponding to each first resource.

A measurement result of each first resource in the measurement results of the Y1 first resources may be separately sent to the network device, or may be jointly sent to the network device. In other words, the measurement results of the Y1 first resources may be jointly sent to the network device. This is not limited in embodiments of this application. The first terminal device may jointly send the measurement results of the Y1 first resources to the network device in the following several manners.

Manner 1: The first terminal device sends the measurement results of the Y1 first resources to the network device by using a bitmap (bitmap).

For example, the first terminal device sends the measurement results of the Y1 first resources to the network device by using the bitmap. The measurement results of the Y1 first resources may include Y1 bitmaps, and the Y1 bitmaps are in a one-to-one correspondence with IDs of the Y1 first resources. For example, a measurement result of one first resource is reported, that is, Y1=1. Assuming that there are N interference levels, the measurement result of the first resource may occupy N bits, and one of the N bits indicates one interference level. For example, N=3, and the measurement result of the first resource may occupy three bits. A mapping relationship between the three bits and an interference level may be shown in table 2. It may be understood that, when Y1=2 and N=3, the measurement result includes six bits, where the first three bits and the last three bits each indicate an interference level in a first resource.

**Table 2**

| Measurement result | Interference level |
|---|---|
| 001 | First level (high) |
| 010 | Second level (medium) |
| 100 | Third level (low) |

Manner 2: The first terminal device sends the measurement results of the Y1 first resources to the network device by using bit state information.

For example, the measurement results of the Y1 first resources may include Y1 bit states, and the Y1 bit states are in a one-to-one correspondence with IDs of the Y1 first resources. For example, a measurement result of one first resource is reported. Assuming that there are N interference levels, the measurement result of the first resource may occupy M1 bits, and one state of the M1 bits indicates one interference level. M1 is an integer obtained by rounding up log₂(N). For example, there are three interference levels, and the measurement result of the first resource may occupy two bits. A mapping relationship between the two bits and an interference level may be shown in table 3.

**Table 3**

| Bit state | Interference level |
|---|---|
| 00 | First level (high) |
| 01 | Second level (medium) |
| 10 | Third level (low) |
| 11 | Reserved |

According to the foregoing manner 1 and manner 2, physical layer signaling such as physical uplink control information, a MAC CE, or RRC signaling may be sent to the network device. Used specific signaling is not limited in embodiments of this application.

Manner 3: The first terminal device may include the measurement results of the Y1 first resources in a measurement report in higher layer signaling (for example, RRC signaling) and send the measurement report to the network device.

For example, an information element (for example, a MeasResultSENSE IE) may be newly added to the measurement report, and the information element indicates the measurement results of the Y1 first resources.

For example, the measurement result includes an interference level, and the MeasResultSENSE IE is implemented as follows:

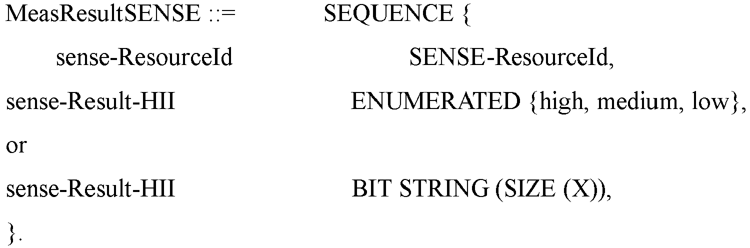

sense-ResourceId indicates an ID of a measured resource, and sense-Result-HII (high interference information, high interference information) indicates an interference level corresponding to the measurement resource. The interference level may be defined in an enumeration manner, for example, ENUMERATED {high, medium, low}. To be specific, a set of predefined interference levels is {low, medium, high}. Alternatively, the interference level may be defined using a bit string by referring to the bitmap in manner 1 or the bit state in manner 2, for example, BIT STRING (SIZE (X)). X is the length of a bit string, and depends on the quantity of bits occupied by the measurement result.

Alternatively, the measurement result includes an SNR, and the MeasResultSENSE IE is implemented as follows:

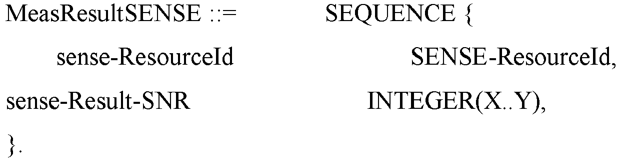

sense-ResourceId indicates an ID of a measured resource, and sense-Result-SNR represents an SNR corresponding to the measured resource. The measurement result may be a value range of the SNR. A plurality of value ranges of the SNR may be predefined, and each value range is quantized to one value. In other words, one value represents one value range of the SNR. For example, INTEGER(X, ..., Y) indicates a plurality of values, and each value indicates one value range of the SNR. The measurement result includes a value, for example, X that corresponds to the value range of the SNR. Specific values of X and Y are not limited in embodiments of this application.

Alternatively, the measurement result includes a sensing channel quality level, and the MeasResultSENSE IE is implemented as follows:

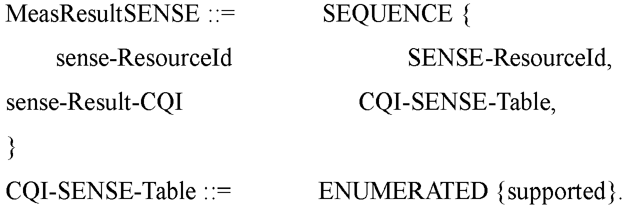

sense-ResourceId indicates an ID of a measured resource, and sense-Result-CQI (channel quality indicator) indicates a sensing channel quality level corresponding to the measured resource. A mapping relationship table between the sensing channel quality level and an SNR value range may be predefined as, for example, the foregoing table 1, that is, CQI-SENSE-Table. The sensing channel quality level can be obtained based on CQI-SENSE-Table.

S605: The network device determines at least one target first resource. The at least one target first resource is used by the first terminal device to send the first signal.

The network device receives the measurement results of the Y1 first resources, and may re-allocate a resource to the first terminal device based on the measurement result. For example, a resource with good sensing performance is allocated to the first terminal device based on the measurement result. The first terminal device performs target detection based on the resource reallocated by the network device, so that accuracy of the target detection can be improved. For ease of description, the resource reallocated by the network device to the first terminal device may be referred to as the at least one target first resource.

It should be understood that each terminal device sends a sensing signal carrying a plurality of beams, and performs beam scanning in a plurality of directions. If beam scanning ranges of different terminal devices on a same time-frequency resource overlap, interference may be caused between the terminal devices. The interference may be inter-beam interference. In this embodiment of this application, an example in which the first resource is a beam resource is used.

In a possible scenario, there is only the first terminal device in a network, and a signal quality indicator of the Y1 first resources of the first terminal device may reflect that signal quality of the Y1 first resources is caused by a factor of the first terminal device. In this scenario, the network device may determine, based on the measurement results of the Y1 first resources, that there are following several cases for a target first resource of the first terminal device.

Case 1: Sensing performance of Y2 first resources in the Y1 first resources is good. For example, a degree of interference of the Y2 first resources in the Y1 first resources is low. The network device may select the Y2 first resources as the target first resource. To be specific, the first terminal device may abandon using resources other than the Y2 first resources in the Y1 first resources.

Case 2: Sensing performance of Y2 first resources in the Y1 first resources is good. To be specific, sensing performance of Y1-Y2 first resources other than the Y2 first resources in the Y1 first resources is poor. The network device still selects the Y1 first resources as the target first resource, but the network device may indicate the first terminal device to adjust transmit powers on the Y1-Y2 first resources, or adjust beam directions of the Y1-Y2 first resources, to improve the sensing performance of the Y1-Y2 first resources as much as possible. For example, the network device indicates that the first terminal device may send the first signal on the Y1-Y2 first resources by using a higher transmit power.

Case 3: If the measurement results of the Y1 first resources indicate that the sensing performance of the Y1 first resources is poor, for example, a degree of interference of the Y1 first resources is high, the network device may select resources other than the Y1 first resources as the target resource.

In another possible scenario, there are a plurality of terminal devices in a network. For example, the network includes a first terminal device and a second terminal device. The first terminal device and the second terminal device each send a respective measurement result to the network device. For example, the first terminal device reports a first measurement result of the Y1 first resources, and the second terminal device reports a second measurement result of Y3 second resources. It should be understood that a second resource is used by the second terminal device to measure an echo signal of the first signal. Y3 and Y1 may be the same or different. The network device may re-allocate target resources to the first terminal device and the second terminal device based on the first measurement result and the second measurement result, to allocate resources with good sensing performance to the first terminal device and the second terminal device as much as possible.

For example, in a same time period, when the first terminal device uses a first resource in the Y1 first resources, and the second terminal device uses a second resource in Y3, and sensing performance of the second terminal device to sense a target object is good, the second resource may be used as a candidate resource of the target resource of the second terminal device. Similarly, in a same time period, when the second terminal device uses a second resource in the Y3 second resources, the first terminal device uses a first resource in Y1, and sensing performance of the first terminal device to sense a target object is good, the first resource may be used as a candidate resource of the target resource of the first terminal device. Therefore, the network device may determine the candidate resources of the target resources of the first terminal device and the second terminal device based on the first measurement result and the second measurement result. Alternatively, it may be considered that the network device may determine a plurality of groups of pairing resources based on the first measurement result and the second measurement result. It should be understood that the plurality of groups of pairing resources may include the candidate resource of the target resource of the first terminal device and the candidate resource of the target resource of the second terminal device. Each group of pairing resources may improve precision and accuracy of sensing the target object by the first terminal device and the second terminal device.

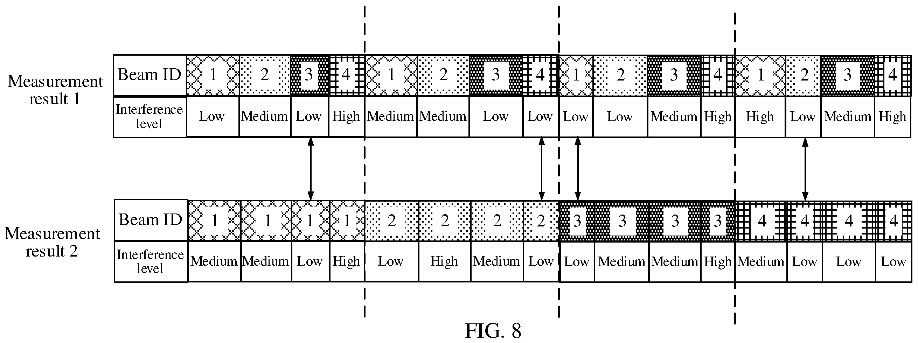

For ease of understanding, FIG. 8 is a schematic diagram of measurement results reported by a first terminal device and a second terminal device respectively. In FIG. 8, a measurement result 1 is the measurement result of the first terminal device, and a measurement result 2 is the measurement result of the second terminal device. FIG. 8 shows an example in which Y1 and Y3 are 4, and a first resource and a second resource are beams. To be specific, the first terminal device has four first resources, and the second terminal device has four second resources. In FIG. 8, IDs of the four first resources of the first terminal device are 1 to 4, and IDs of the four second resources of the second terminal device are also 1 to 4. It should be noted that, an ID of a resource does not limit a beam direction. In other words, beam directions of a first resource and a second resource that have a same ID are not necessarily the same.

It can be learned from FIG. 8 that, if the second terminal device uses a beam 1, the first terminal device performs scanning in a sequence of the beam 1 to a beam 4, and interference levels of the beam 1 and a beam 3 that are used by the first terminal device are lower than interference levels of other beams that are used. In this case, when the second terminal device uses a beam 1, the beam 1 and/or the beam 3 of the first terminal device may be used as a candidate resource of a target first resource. Similarly, the second terminal device uses a beam 2, and interference levels of the beam 3 and the beam 4 that are used by the first terminal device are low. In this case, the beam 3 and/or the beam 4 may be used as the candidate resource of the target first resource. Similarly, the second terminal device uses a beam 3, and the beam 1 and/or the beam 2 of the first terminal device may be used as the candidate resource of the target first resource. The second terminal device uses a beam 4, and the beam 2 of the first terminal device may be used as the candidate resource of the target first resource. In this case, the network device may determine four groups of pairing resources based on a measurement result 1 and a measurement result 2. For example, the four groups of pairing resources may include {beam 3, beam 1}, {beam 4, beam 2}, {beam 1, beam 3}, and {beam 2, beam 4}. In the four groups of pairing resources, a resource at a front position is the candidate resource of the target resource of the first terminal device, and a resource at a back position is the candidate resource of the target resource of the second terminal device.

It should be noted that, FIG. 8 shows an example in which the first resource is the beam and the second resource is the beam. To be specific, a measurement result reported by a terminal device to the network device is a measurement result for a beam. In this case, a resource reallocated by the network device based on the measurement result to the terminal device is also for the beam. However, a time-frequency resource used by the terminal device may be fixed, or may be re-indicated by the network device. In other words, if a pattern (pattern) of the time-frequency resource used by the terminal device to send the first signal is fixed, the network device may re-indicate a beam for the terminal device, and a time-frequency resource for sending the beam may be determined based on a pattern of a resource. If a pattern (pattern) of the time-frequency resource used by the terminal device to send the first signal is not fixed, the network device may re-indicate a beam for the terminal device, and indicate a time-frequency resource configuration for sending the beam.

For example, the beam 1 of the first terminal device is sent on a symbol 1, and the beam 2 of the first terminal device is sent on a symbol 2. The beam 1 of the second terminal device is sent on a symbol 1, and the beam 2 of the first terminal device is sent on a symbol 2. The measurement result reported by the first terminal device indicates that when the first terminal device uses the beam 1 to perform target sounding, sensing performance of the first terminal device is good. It should be understood that when the first terminal device uses the beam 1, the second terminal device also uses the beam 1. When the first terminal device performs target sounding by using the beam 2, the sensing performance of the first terminal device is poor. When the first terminal device uses the beam 2, the second terminal device also uses the beam 2. If patterns of time-frequency resources used by the first terminal device and the second terminal device to send the first signal are fixed, the network device may indicate beam indexes to the first terminal device and the second terminal device, to be specific, indicate a beam scanning order of the terminal device, and does not need to indicate a time-frequency resource configuration, in other words, allocate the beam 1 to the first terminal device and allocate the beam 1 to the second terminal device. In other words, the network device does not allocate a resource with poor sensing performance to the terminal device. If patterns of resources used by the first terminal device and the second terminal device to send the first signal are not fixed, in addition to allocating the beams 1 to the first terminal device and the second terminal device, the network device may further allocate, to the first terminal device and the second terminal device, the time-frequency resources for sending the first signal. The terminal device may allocate a same time-frequency resource to the first terminal device and the second terminal device. For example, the network device may allocate the beam 1 to the first terminal device, and indicate the beam 1 to be sent on the symbol 1 and the symbol 2. The network device may allocate the beam 1 to the second terminal device, and indicate the beam 1 to be sent on the symbol 1 and the symbol 2. Because a pairing resource determined by the network device based on the measurement result reported by the first terminal device is a candidate beam of a respective target beam of the first terminal device and the second terminal device, even if the network device allocates the same time-frequency resource to the first terminal device and the second terminal device, the first terminal device uses a beam in a configuration resource, and sensing performance is good. Alternatively, the network device may allocate different time-frequency resources to the first terminal device and the second terminal device provided that it can be ensured that sensing performance of a resource used by the first terminal device is good.

In a possible scenario, interference of a second resource of the second terminal device to each first resource of the first terminal device is large, and the network device may re-adjust a transmit power or a beam direction of a signal on the second resource of the second terminal device, to reduce the interference to each first resource of the first terminal device.

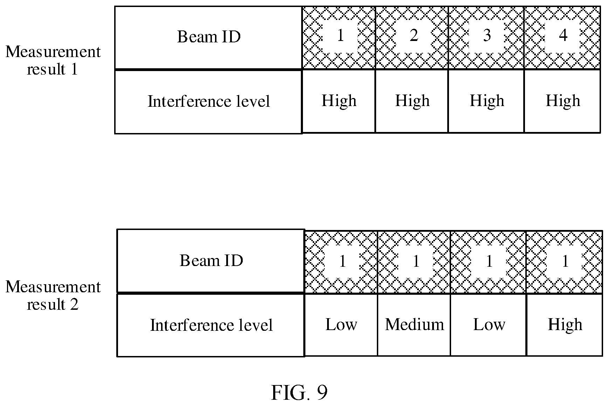

Similar to FIG. 8, FIG. 9 is a schematic diagram of measurement results reported by a first terminal device and a second terminal device respectively. A measurement result 1 is the measurement result of the first terminal device, and a measurement result 2 is the measurement result of the second terminal device. FIG. 9 shows an example in which each beam measurement result is reported by the first terminal device when the second terminal device uses a beam 1. It can be learned from FIG. 9 that, when the second terminal device uses the beam 1, interference levels of four beams of the first terminal device are high. In this case, it may be considered that the beam 1 of the second terminal device interferes with each beam used by the first terminal device. The network device may determine and adjust, based on the measurement result 1 and the measurement result 2, a direction of the beam 1 of the second terminal device, to reduce interference of the beam 1 to each beam of the first terminal device. Alternatively, the network device may indicate the second terminal device not to use the beam 1, to reduce the interference of the beam 1 to each beam of the first terminal device. Alternatively, the network device may reduce a transmit power of the beam 1 of the second terminal device, to reduce the interference of the beam 1 to each beam of the first terminal device. It should be noted that, after the network device adjusts the direction of the beam 1 or reduces the transmit power of the beam 1, the first terminal device may re-measure a used resource, and report a measurement result to the network device. The network device determines a candidate resource of a target first resource of the first terminal device based on the measurement result reported by the first terminal device.

S606: The network device sends second indication information, and correspondingly, the first terminal device receives the second indication information. The second indication information includes an identifier of at least one target first resource.

After determining a candidate resource of a target resource of each terminal device, the network device may notify the target resource allocated to each terminal device. The first terminal device is used as an example, and the network device may send the second indication information to the first terminal device. The second indication information may indicate the at least one target first resource allocated by the network device to the first terminal device.

The foregoing example is still used, and an example in which the first resource is a beam is used. The second indication information may include the identifier of the at least one target first resource. For example, assuming that there is only the first terminal device in a network, and the measurement results of the Y1 first resources indicates that the degree of the interference of the Y2 first resources in the Y1 first resources is low. The network device may allocate an identifier of the Y2 first resources to the first terminal device, in other words, the second indication information may include the identifier of the Y2 first resources. Alternatively, the network device allocates the Y1 first resources to the first terminal device. In addition, the network device indicates the first terminal device to send the first signal on Y1-Y2 first resources by using a higher transmit power. In this case, the second indication information may alternatively include identifiers of the Y1 first resources.

For another example, the network includes a plurality of terminal devices. The network device may determine a plurality of groups of pairing resources. The second indication information may include an identifier of the first resource indicated by one or more groups of pairing resources in the plurality of groups of pairing resources. The example in FIG. 8 is still used, and the network device may determine that the four groups of pairing resources may include {beam 3, beam 1}, {beam 4, beam 2}, {beam 1, beam 3}, and {beam 2, beam 4}. The second indication information may include an identifier of the first resource indicated by one or more groups of pairing resources in the four groups of pairing resources. For example, the second terminal device uses the beam 1, and the second indication information may include an identifier of the beam 3 of the first terminal device.

S607: The first terminal device sends the first signal on the target resource.

It should be understood that a space domain resource corresponding to the target resource is the at least one target first resource. The first terminal device receives the second indication information, and may determine, based on the second indication information, the at least one target first resource for sending the first signal. If a pattern of a time-frequency resource used by the first terminal device to send the first signal is fixed, the first terminal device may determine, based on the second indication information, the target resource for sending the first signal. Therefore, the first terminal device sends the first signal on the determined at least one target resource, to sense the target object. It should be noted that, the pattern of the time-frequency resource used by the first terminal device to send the first signal is configured or preconfigured by the network device.

If the pattern of the time-frequency resource used by the first terminal device to send the first signal is not fixed, in addition to indicating the at least one target first resource to the first terminal device by using the second indication information, the network device further indicates, to the first terminal device, the time-frequency resource for sending the first signal. For example, the network device may further send fourth indication information to the first terminal device, and the fourth indication information may configure the time-frequency resource used by the first terminal device to send the first signal. For example, the fourth indication information may indicate duration of the at least one target first resource. The first terminal device may determine, based on the third indication information and the fourth indication information, a target resource for sending the first signal, and then send the first signal on the target resource. The fourth indication information may be carried in RRC signaling, DCI signaling, or MAC CE signaling.

In this embodiment of this application, each terminal device may measure signals received on a plurality of resources, to obtain a measurement result of each resource, and report the measurement result to the network device. The network device may predict, based on the measurement result, a candidate resource on which each terminal device performs target sensing. In this manner, the network device may allocate resources with good sensing performance to a plurality of terminal devices, to improve accuracy of sensing the target object by the terminal device.

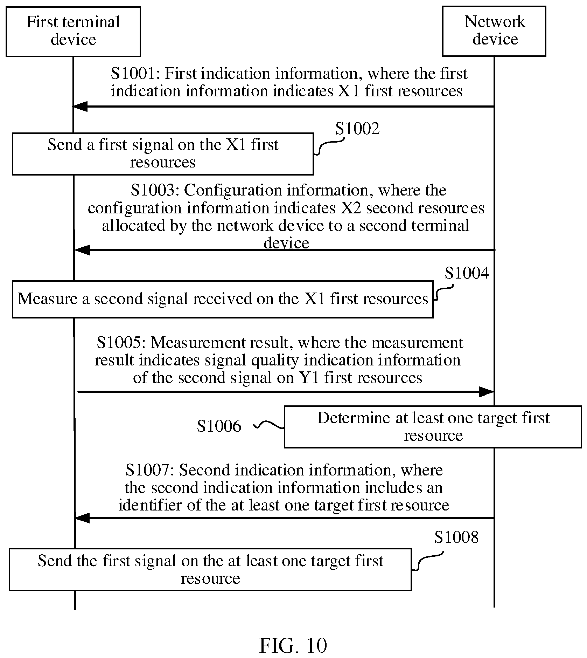

FIG. 10 is a schematic flowchart of an interference coordination method according to an embodiment of this application. An example in which the procedure is applied to the second scenario is used.

S1001: A network device sends first indication information to a first terminal device, and correspondingly, the first terminal device receives the first indication information. The first indication information indicates X1 first resources.

A specific implementation of S1001 is the same as a specific implementation of S601. For details, refer to related content of S601. Details are not described herein again.

S1002: The first terminal device sends a first signal on the X1 first resources.

A specific implementation of S1002 is the same as a specific implementation of S602. For details, refer to related content of S602. Details are not described herein again.

S1003: The network device sends configuration information to the first terminal device, and correspondingly, the first terminal device receives the configuration information. The configuration information indicates X2 second resources allocated by the network device to a second terminal device.

The X2 second resources are allocated by the network device to the second terminal device, and are used by the second terminal device to send the first signal. In this embodiment of this application, the network device may notify the first terminal device of the X2 second resources allocated to the second terminal device. For example, the network device may send the configuration information to the first terminal device, and the configuration information indicates the X2 second resources of the second terminal device.

It should be noted that, a sequence of performing S1003, S1001, S1002, and S1004 is not limited in this embodiment of this application. For example, S1003 may be performed before or after S1001, may be performed after S1002, or may be performed after S1004.

S1004: The first terminal device measures a second signal received on the X1 first resources. The second signal includes an echo signal of the first signal.

A difference between S1004 and S603 lies in that a measurement result determined by the first terminal device is determined based on X3 second resources used by the second terminal device. It should be understood that the X3 second resources used by the second terminal device may affect sensing performance of the X1 first resources of the first terminal device. For example, when the second terminal device uses a second resource in the X2 second resources, sensing performance of a first resource in X1 used by the first terminal device is poor.

The first terminal device determines, based on the X2 second resources, that the measurement results of the X1 first resources may indicate a plurality of groups of pairing resources. Each group of pairing resources indicate a respective interference level of one second resource and one first resource. For example, the measurement results of the X1 first resources may include Z1 groups of pairing resources, and each of the Z1 groups of pairing resources may include one of the X1 first resources and one of the X2 second resources. It should be understood that Z1 is greater than or equal to 1, and is less than or equal to X1. Alternatively, Z1 is greater than or equal to 1, and is less than or equal to X2. For example, the example in FIG. 8 is still used. Assuming that X1=4 and X2=4, the measurement results of the X1 first resources may include pairing resources including four beams of the first terminal device and four beams of the second terminal device, for example, {beam 1, beam 1}, {beam 1, beam 2}, ..., {beam 4, beam 1}, {beam 4, beam 2}, {beam 4, beam 3}, and {beam 4, beam 4}.

It is considered that, in the measurement results of the X1 first resources, interference levels corresponding to some pairing resources are low, and interference levels corresponding to some pairing resources are high. For example, interference levels corresponding to {beam 4, beam 1} and {beam 4, beam 3} are high, and interference levels corresponding to {beam 3, beam 1}, {beam 4, beam 2}, {beam 1, beam 3}, and {beam 2, beam 4} are low. After obtaining the measurement results of the X1 first resources from the first terminal device, the first terminal device may send the measurement results of the X1 first resources to the network device, or may send measurement results of some of the X1 first resources to the network device. For example, the first terminal device may send a measurement result of a first resource with a low interference level to the network device. For a first resource corresponding to a measurement result that is not sent to the network device, it may be considered by default that a degree of interference is high.

For example, the first terminal device may send measurement results of Y1 first resources to the network device. It should be understood that Y1 is less than or equal to X1. For example, the measurement results of the Y1 first resources includes Z1 pieces of pairing information. Each piece of pairing information indicates one group of pairing resources. In other words, the measurement results of the Y1 first resources may indicate Z1 groups of pairing resources. Each of the Z1 groups of pairing resources may include one of the X1 first resources and one of the X2 second resources. It should be understood that Z1 is greater than or equal to 1, and is less than or equal to X1. Alternatively, Z1 is greater than or equal to 1, and is less than or equal to X2. The Y1 first resources may be considered as resources with low interference levels. For example, the measurement results of the Y1 first resources, that is, the Z1 groups of pairing resources, may indicate {beam 3, beam 1}, {beam 4, beam 2}, {beam 1, beam 3}, and {beam 2, beam 4}.

S1005: The first terminal device sends a measurement result to the network device. The measurement result indicates signal quality indication information of the second signal on the Y1 first resources.

The measurement results of the Y1 first resources may be separately sent to the network device, or may be jointly sent to the network device. This is not limited in embodiments of this application. The first terminal device may send the measurement results of the Y1 first resources to the network device in the following several manners.

Manner 1: The first terminal device may send the measurement results of the Y1 first resources to the network device by using a bitmap (bitmap).

For example, the first terminal device sends the measurement results of the Y1 first resources to the network device by using the bitmap. The measurement results of the Y1 first resources may include Y1 bitmaps, and the Y1 bitmaps are in a one-to-one correspondence with the measurement results of the Y1 first resources. The measurement results of the Y1 first resources may occupy a plurality of bits, and the plurality of bits include a first part of bits and a second part of bits. One bit in the first part of bits indicates one first resource, and one bit in the second part of bits indicates one second resource. For example, Y1 is equal to 3, to be specific, the first terminal device sends measurement results of three first resources. Assuming that there are also three second resources paired with the three first resources, the measurement results of the three first resources may be shown in table 4. In table 4, an example in which one bit in the first part of bits indicates an ID of one resource is used.

**Table 4**

| Bitmap | 001001 | 001010 | 001100 | 010001 | 010010 | 010100 | 100001 | 100010 | 100100 |
|---|---|---|---|---|---|---|---|---|---|
| Pairing resource | {b1, b1} | {b1, b2} | {b1, b3} | {b2, b1} | {b2, b2} | {b2, b3} | {b3, b1} | {b3, b2} | {b3, b3} |

Manner 2: The first terminal device sends the measurement results of the Y1 first resources to the network device by using bit state information.

For example, assuming that there are Y3 second resources paired with the Y1 first resources, the measurement results of the Y1 first resources may occupy M2 bits, and a state of the M2 bits indicates one group of pairing resource. M2 is an integer obtained by rounding up log₂(Y1×Y3). For example, if Y1=3 and Y3=3, the measurement results of the Y1 first resources may be shown in table 5.

**Table 5**

| Bit State | 0000 | 0001 | 0010 | 0011 | 0100 | 0101 | 0110 | 0111 | 1000 |
|---|---|---|---|---|---|---|---|---|---|
| Beam pairing information | {b1, b1} | {b1, b2} | {b1, b3} | {b2, b1} | {b2, b2} | {b2, b3} | {b3, b1} | {b3, b2} | {b3, b3} |

According to the foregoing manner 1 and manner 2, physical layer signaling such as physical uplink control information, a MAC CE, or RRC signaling may be sent to the network device. Used specific signaling is not limited in embodiments of this application.

Manner 3: The first terminal device may include the measurement results of the Y1 first resources in a measurement report in higher layer signaling (for example, RRC signaling) and send the measurement report to the network device. For example, the first terminal device may send the measurement report to the network device by using the higher layer signaling, and the measurement report includes the measurement results of the Y1 first resources. An information element (for example, a MeasResultSENSE IE) may be newly added to the measurement report, and the information element indicates the measurement results of the Y1 first resources.

For example, the measurement result includes an index of each pairing resource in the Z1 groups of pairing resources, and Z1. For example, the MeasResultSENSE IE is implemented as follows:

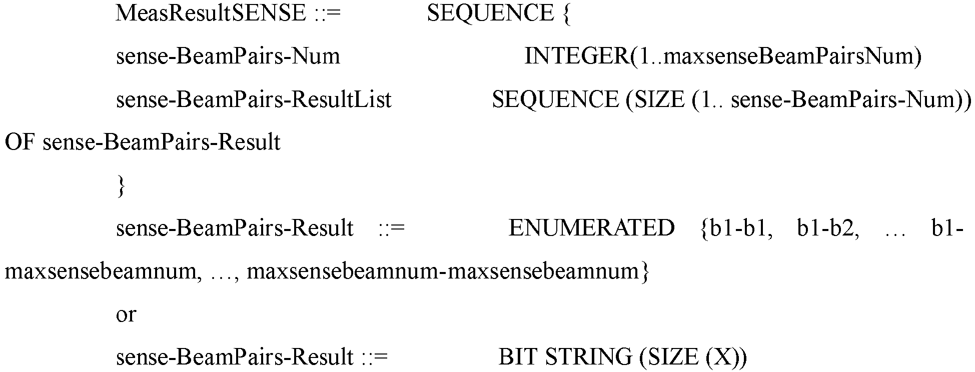

sense-BeamPairs-Num indicates the quantity of pairing beams in the measurement result, that is, Z1. In other words, INTEGER(1..maxsenseBeamPairsNum) may be INTEGER(Z1). sense-BeamPairs-Result may indicate the measurement result. The measurement result may include a resource index pair in pairing information, and the pairing information may be defined in an enumeration manner, for example, ENUMERATED {b1-b1, b1-b2, ..., b1-maxsensebeamnum, ..., maxsensebeamnum-maxsensebeamnum}. To be specific, a set of predefined pairing information is {b1-b1, b1-b2, ..., b1-maxsensebeamnum, ..., maxsensebeamnum-maxsensebeamnum}. Alternatively, the pairing information may be defined using a bit string by referring to the bitmap in manner 1 or the bit state in manner 2, for example, BIT STRING (SIZE (X)). X is the length of a bit string, and depends on the quantity of bits occupied by the measurement result.

S1006: The network device determines at least one target first resource. The at least one target first resource is used by the first terminal device to send the first signal.

The network device receives the measurement result from the first terminal device, and re-allocates a resource to the first terminal device based on the measurement result, for example, allocates a resource with good sensing performance to the first terminal device based on the measurement result. For example, the network device may use a first resource in each of the Z1 groups of pairing resources as a target first resource. Alternatively, the network device may select Z2 groups of pairing resources from the Z1 groups of pairing resources based on a resource used by another terminal device, and use the first resource in each group of the Z2 groups of pairing resources as the target first resource.

S1007: The network device sends second indication information, and correspondingly, the first terminal device receives the second indication information. The second indication information includes an identifier of the at least one target first resource.

A specific implementation of S1007 is the same as a specific implementation of S606, and details are not described herein again.

S1008: The first terminal device sends the first signal on a target resource.

A specific implementation of S1008 is the same as a specific implementation of S607, and details are not described herein again.

In this embodiment of this application, each terminal device reports, to the network device, a measurement status of a resource used by the terminal device, to indicate a status of interference caused by a resource used by another terminal device to the terminal device. The network device may predict, based on the measurement result, a candidate resource on which each terminal device performs target sensing. In this manner, the network device may allocate, to a plurality of terminal devices, resources with good sensing performance, for example, resources with a low degree of interference, to reduce or avoid interference between the plurality of terminal devices.

In the embodiments shown in FIG. 6 and FIG. 10, interference between beam resources of different terminal devices is used as an example. In a possible implementation, the network device may further configure different time-frequency resources for different terminal devices. In other words, the time-frequency resources of the different terminal devices do not overlap, to reduce the interference between the terminal devices as much as possible.

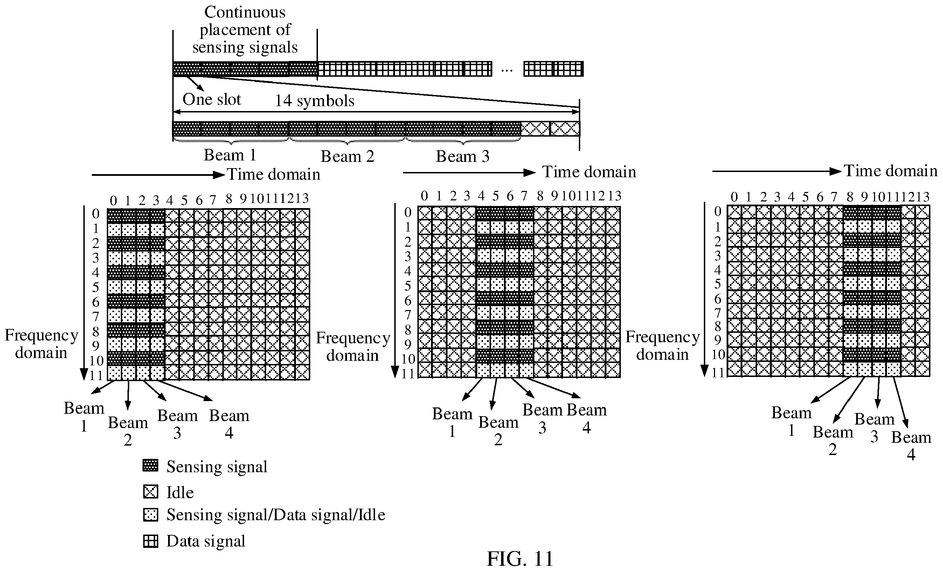

For example, FIG. 11 is a schematic diagram of patterns of resources used by three terminal devices to send first signals. FIG. 11 shows an example in which symbols corresponding to adjacent beams are consecutive in time domain. In FIG. 11, symbols occupied by a time domain resource of a terminal device 1 in one slot are symbols whose indexes are 0 to 3. Symbols occupied by a time domain resource of a terminal device 2 are symbols whose indexes are 4 to 7. Symbols occupied by a time domain resource of a terminal device 3 are symbols whose indexes are 8 to 11. It can be learned that the terminal device 1 to the terminal device 3 send the first signals on different time domain resources, so that the interference between the terminal devices can be reduced.

Further, even if the network device configures different time-frequency resources for different terminal devices, each terminal device still measures a to-be-used resource based on the procedure shown in FIG. 6 or FIG. 10, to meet a sensing performance requirement.

In embodiments provided in this application, the methods provided in embodiments of this application are separately described from a perspective of interaction between the first terminal device, the network device, and even the second terminal device. Steps performed by the network device may be implemented by different function entities included in the network device. In other words, the function entities that perform the steps of the network device may be located in different physical entities. For example, a first function entity is configured to receive a measurement result from a first terminal device. A second function entity is configured to determine, based on the measurement result reported by the first terminal device, a target resource used by the first terminal device to send a first signal. A third function entity is configured to determine, based on the measurement result, a resource on which the first terminal device receives the second signal. In other words, the first function entity, the second function entity, and the third function entity jointly complete the steps performed by the network device in embodiments of this application. A specific division manner of the function entities is not limited in this application. For example, the second function entity and the third function entity may alternatively be one function entity. When a network architecture includes one or more DUs, one or more CUs, and one or more radio units (radio units, RUs), the steps performed by the network device may be implemented by one or more of the following: the DUs, the CUs, and the RUs. To implement the functions in the foregoing method provided in embodiments of this application, the first terminal device and the network device may include a hardware structure and/or a software module, and implement the foregoing functions in a form of the hardware structure, a software module, or a combination of the hardware structure and the software module. Whether a function in the foregoing functions is performed using the hardware structure, the software module, or the combination of the hardware structure and the software module depends on a particular application and a design constraint condition that are of the technical solutions.

Based on a same technical concept of the method embodiments, an embodiment of this application provides a communication apparatus. The following describes, with reference to the accompanying drawings, a communication apparatus for implementing the foregoing method in embodiments of this application.

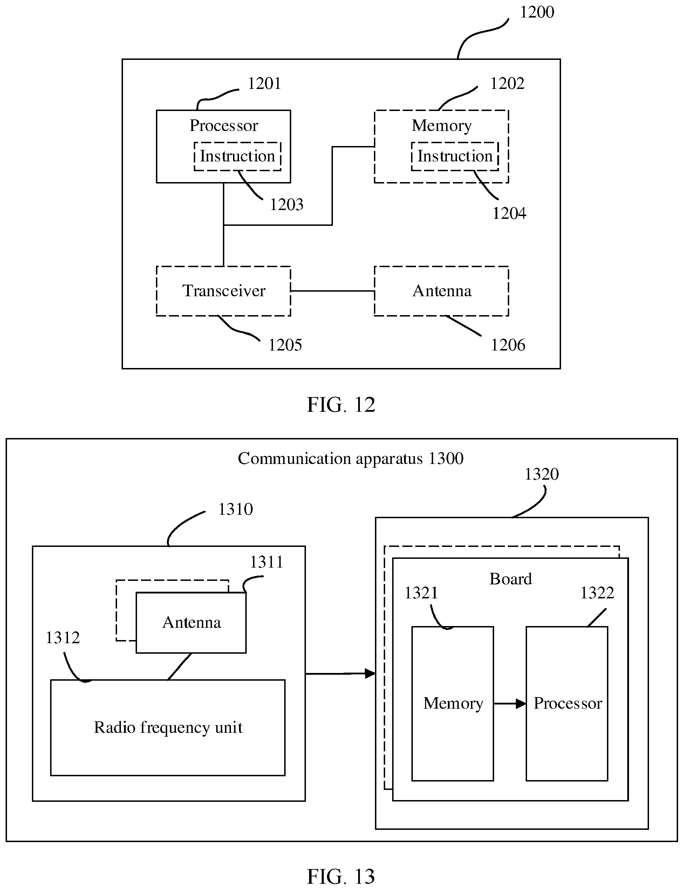

FIG. 12 is a schematic block diagram of a communication apparatus 1200 according to an embodiment of this application. The communication apparatus 1200 may be the terminal device in FIG. 1, and is configured to implement the method for the first terminal device or the network device in the foregoing method embodiments. For a specific function, refer to the descriptions in the method embodiments.

The communication apparatus 1200 includes one or more processors 1201. The processor 1201 may also be referred to as a processing unit or a processing module, and may implement a specific control function. The processor 1201 may be a general-purpose processor, a dedicated processor, or the like. For example, the processor 1201 includes: a baseband processor, a central processing unit, an application processor, a modem processor, a graphics processing unit, an image signal processor, a digital signal processor, a video codec processor, a controller, a memory, a neural-network processing unit, and/or the like. The baseband processor may be configured to process a communication protocol and communication data. The central processing unit may be configured to control the communication apparatus 1200, execute a software program, and/or process data. Different processors may be independent components, or may be integrated into one or more processors, for example, integrated into one or more application-specific integrated circuits.

Optionally, the communication apparatus 1200 includes one or more memories 1202, configured to store instructions 1204. The instructions may be run on the processor, to enable the communication apparatus 1200 to perform the method described in the foregoing method embodiment. Optionally, the memory 1202 may further store data. The processor and the memory may be separately disposed, or may be integrated together. In embodiments of this application, the memory 1202 may be a nonvolatile memory, a hard disk drive (hard disk drive, HDD) or a solid-state drive (solid-state drive, SSD), or may be a volatile memory (volatile memory), for example, a random access memory (random access memory, RAM). The memory is any other medium that can be used for carrying or storing expected program code having instructions or in a data structure form and that can be accessed by a computer, but is not limited thereto. The memory in embodiments of this application may further be a circuit or any other apparatus that can implement a storage function, and is configured to store program instructions and/or data.

Optionally, the communication apparatus 1200 may include instructions 1203 (which may also be referred to as code or programs in some cases), and the instructions 1203 may be run on the processor, to enable the communication apparatus 1200 to perform the method described in the foregoing embodiments. The processor 1201 may store the data.

Optionally, the communication apparatus 1200 may further include a transceiver 1205 and/or an antenna 1206. The transceiver 1205 may be referred to as a transceiver unit, a transceiver module, a transceiver machine, a transceiver circuit, a transceiver, an input/output interface, or the like, and is configured to implement a transceiver function of the communication apparatus 1200 via the antenna 1206.

The processor 1201 and the transceiver 1205 that are described in this application may be implemented on an integrated circuit (integrated circuit, IC), an analog IC, a radio frequency integrated circuit (radio frequency identification, RFID), a mixed signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that can be embedded in another device). For details, refer to the foregoing descriptions of the terminal device and the network device. Details are not described herein again.

Optionally, the communication apparatus 1200 may further include one or more of the following components: a wireless communication module, an audio module, an external memory interface, an internal memory, a universal serial bus (universal serial bus, USB) interface, a power management module, an antenna, a loudspeaker, a microphone, an input/output module, a sensor module, a motor, a camera lens, a display screen, or the like. It may be understood that, in some embodiments, the communication apparatus 1200 may include more or fewer components, or some integrated components, or some split components. These components may be hardware, software, or a combination implementation of the software and the hardware.

It should be noted that, the communication apparatus in the foregoing embodiments may be a first terminal device (or a network device), or may be a circuit, or may be a chip applied to the first terminal device (or a network device), or may be another combined component or component that has a function of a first terminal (or the network device), or the like. When the communication apparatus is the first terminal device (or the network device), the transceiver module may be a transceiver, and may include an antenna, a radio frequency circuit, and the like. The processing module may be a processor, for example, a central processing unit (central processing unit, CPU) When the communication apparatus is the component having the function of the first terminal device (or the network device), the transceiver unit may be a radio frequency unit, and the processing module may be a processor. When the communication apparatus is a chip system, the communication apparatus may be a field programmable gate array (field programmable gate array, FPGA), an application-specific integrated chip (application specific integrated chip, ASIC), a system on chip (system on chip, SoC), a CPU, a network processor (network processor, NP), a digital signal processing circuit (digital signal processor, DSP), a micro controller unit (micro controller unit, MCU), a programmable controller (programmable logic device, PLD), or another integrated chip. The processing module may be a processor of the chip system. The transceiver module or the communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory by using another component) and transmit the code instructions to the processor. The processor may be configured to run the code instructions to perform the method in the foregoing embodiments. For another example, the interface circuit may alternatively be a signal transmission interface circuit between the communication processor and a transceiver machine.

In some possible implementations, the communication apparatus 1200 may correspondingly implement behavior and functions that are of the first terminal device in the foregoing method embodiments, for example, implement the method performed by the first terminal device in the embodiment in FIG. 6 or FIG. 10. For example, the communication apparatus 1200 may be a first terminal device, a component (for example, a chip or a circuit) applied to the first terminal device, a chip or a chip set in the first terminal device, or a part that is of a chip and that is configured to perform a related method function.

For example, the processor 1201 is configured to measure a second signal received on X1 first resources. The second signal includes an echo signal of a first signal, and the first signal is a signal sent by the communication apparatus 1200. The transceiver 1205 is configured to send a measurement result to a network device. The measurement result indicates signal quality indication information of the second signal on Y1 first resources. Y1 is greater than or equal to 1, and the Y1 first resources belong to the X1 first resources.

In an optional implementation, the signal quality indication information includes one or more of the following: a channel quality indicator, a signal power value, a signal-to-interference ratio, a signal-to-interference plus noise ratio, an interference level, and a sensing detection probability. The sensing detection probability indicates a probability that the communication apparatus 1200 detects a target.

In an optional implementation, the transceiver 1205 is further configured to receive configuration information from the network device. The configuration information indicates X2 second resources allocated to a second terminal device. The X2 second resources partially or completely overlap the X1 first resources, and X2 is greater than or equal to 1.

In an optional implementation, that the measurement result indicates signal quality indication information of the second signal on Y1 first resources includes: The measurement result includes Z1 pieces of pairing information. Each piece of pairing information indicates one of the Y1 first resources and one of Y2 second resources. Y2 is greater than or equal to 1, the Y2 second resources belong to the X2 second resources, and Z1 is greater than or equal to 1.

In an optional implementation, the transceiver 1205 is further configured to receive second indication information from the network device, and send the first signal on at least one target first resource indicated by the second indication information.

In an optional implementation, that the second indication information indicates at least one target first resource includes: The second indication information includes an identifier of the at least one target first resource.

In an optional implementation, time-frequency resources used by different terminal devices do not overlap.

In some possible implementations, the communication apparatus 1200 may correspondingly implement behavior and functions that are of the network device in the foregoing method embodiments, for example, implement the method performed by the network device in the embodiment in FIG. 6 or FIG. 7. For example, the communication apparatus 800 may be a network device, a component (for example, a chip or a circuit) applied to the network device, a chip or a chip set in the network device, or a part that is of a chip and that is configured to perform a related method function.

For example, the transceiver 1205 is configured to send first indication information to a first terminal device, receive a measurement result from the first terminal device, and send second indication information to the first terminal device. The first indication information indicates the first terminal device to measure a second signal received on X1 first resources. The second signal includes an echo signal of a first signal, and the first signal is a signal sent by the first terminal device. The measurement result indicates signal quality indication information of the second signal on Y1 first resources. Y1 is greater than or equal to 1, and the Y1 first resources belong to the X1 first resources. The second indication information indicates at least one target first resource. The at least one target first resource is determined based on the signal quality indication information of the second signal on the Y1 first resources. The at least one target resource is used by the first terminal device to send the first signal.

In an optional implementation, the signal quality indication information includes one or more of the following: a channel quality indicator, a signal power value, a signal-to-interference ratio, a signal-to-interference plus noise ratio, an interference level, and a sensing detection probability. The sensing detection probability indicates a probability that the first terminal device detects a target.

In an optional implementation, the transceiver 1205 is further configured to send configuration information to the first terminal device. The configuration information indicates X2 second resources allocated to a second terminal device. The X2 second resources partially or completely overlap the X1 first resources, and X2 is greater than or equal to 1.

In an optional implementation, that the measurement result indicates signal quality indication information of the second signal on Y1 first resources includes: The measurement result includes Z1 pieces of pairing information. Each piece of pairing information indicates one of the Y1 first resources and one of Y2 second resources. Y2 is greater than or equal to 1, the Y2 second resources belong to the X2 second resources, and Z1 is greater than or equal to 1.

In an optional implementation, the processor 1201 is configured to determine Z2 pieces of pairing information based on the measurement result. Each piece of pairing information indicates one of Y3 first resources and one of Y4 second resources. The Y3 first resources belong to the Y1 first resources, the Y4 second resources belong to the Y2 second resources, and Z2 is greater than or equal to 1.

In an optional implementation, that the second indication information indicates at least one target first resource includes: The second indication information includes an identifier of a first resource indicated by each of the Z2 pieces of pairing information.

In an optional implementation, time-frequency resources used by different terminal devices do not overlap.

FIG. 13 is a schematic diagram of a structure of a simplified communication apparatus. For ease of understanding and illustration, FIG. 13 shows an example in which the communication apparatus is a base station. The base station may be applied to the system shown in FIG. 1, may be the network device in FIG. 1, and performs functions of the network device in the method embodiments.

The communication apparatus 1300 may include a processor 1322, and may further include a transceiver 1310 and a memory 1321. The processor 1322 is configured to support the communication apparatus 1300 in performing a corresponding function in the foregoing method. The transceiver 1310 may be used by the communication apparatus for communication, for example, is configured to send or receive the first indication information or capability information. The memory 1321 is coupled to the processor 1322, and may be configured to store a program and data that are necessary for the communication apparatus 1300 to implement various functions.

Specifically, the transceiver 1310 may be a wireless transceiver, and may be configured to support the communication apparatus 1300 in receiving and sending signaling and/or data through a radio air interface. The transceiver 1310 may also be referred to as a transceiver unit or a communication unit. The transceiver 1310 may include one or more radio frequency units 1312 and one or more antennas 1311. The radio frequency unit, for example, a remote radio unit (remote radio unit, RRU) or an active antenna unit (active antenna unit, AAU), may be specifically configured to transmit a radio frequency signal, and perform conversion between a radio frequency signal and a baseband signal. The one or more antennas may be specifically configured to radiate and receive the radio frequency signal. Optionally, the transceiver 1310 may include only the foregoing radio frequency unit. In this case, the communication apparatus 1300 may include the transceiver 1310, the memory 1321, the processor 1322, and the antenna 1311.

The memory 1321 and the processor 1322 may be integrated together or may be independent of each other. As shown in FIG. 13, the memory 1321 and the processor 1322 may be integrated into a control unit 1320 of the communication apparatus 1300. For example, the control unit 1320 may include a baseband unit (baseband unit, BBU) of an LTE base station, where the baseband unit may also be referred to as a digital unit (digital unit, DU). Alternatively, the control unit 1310 may include a DU and/or a CU in a base station in 5G and a future radio access technology. The control unit 1320 may include one or more antenna panels. A plurality of antenna panels may jointly support a radio access network (for example, an LTE network) of a single access standard, or the plurality of antenna panels may separately support radio access networks (for example, an LTE network, a 5G network, and another network) of different access standards. The memory 1321 and the processor 1322 may serve the one or more antenna panels. In other words, the memory 1321 and the processor 1322 may be separately disposed on each antenna panel. Alternatively, the plurality of antenna panels may share a same memory 1321 and a same processor 1322. In addition, a necessary circuit may be disposed on each antenna panel. For example, the circuit may be configured to implement coupling between the memory 1321 and the processor 1322. The transceiver 1310, the processor 1322, and the memory 1321 may be connected to each other by using a bus (bus) structure and/or another connection medium.

Based on the structure shown in FIG. 13, when the communication apparatus 1300 needs to send data, the processor 1322 may perform baseband processing on the to-be-sent data and output a baseband signal to the radio frequency unit, and the radio frequency unit performs radio frequency processing on the baseband signal and sends a radio frequency signal in an electromagnetic wave form via an antenna. When data is sent to the communication apparatus 1300, the radio frequency unit receives a radio frequency signal via an antenna, converts the radio frequency signal into a baseband signal, and outputs the baseband signal to the processor 1322. The processor 1322 converts the baseband signal into data, and processes the data.

Based on the structure shown in FIG. 13, the transceiver 1310 may be configured to perform the steps performed by the transceiver 1205, and/or the processor 1322 may be configured to invoke instructions in the memory 1321, to perform the steps performed by the processor 1322.

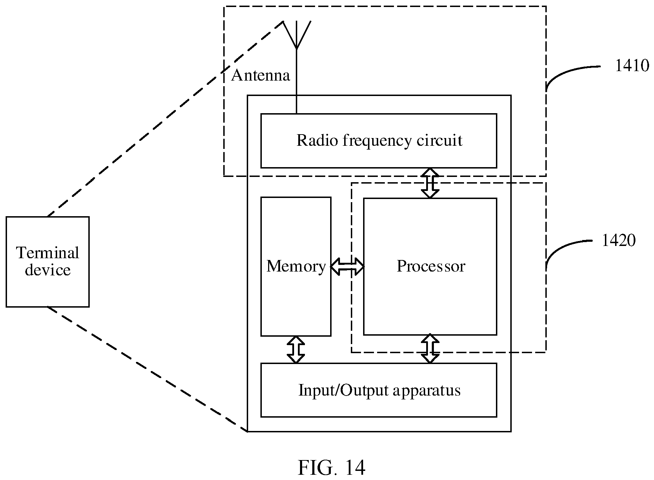

FIG. 14 is a schematic diagram of a structure of a simplified terminal device. For ease of understanding and illustration, FIG. 14 shows an example in which the terminal device is a mobile phone. As shown in FIG. 14, the terminal device includes a processor, a memory, a radio frequency circuit, an antenna, and an input/output apparatus. The processor is mainly configured to process a communication protocol and communication data, control an on-board unit, execute a software program, process data of the software program, and so on. The memory is mainly configured to store the software program and the data. The radio frequency circuit is mainly configured to perform conversion between a baseband signal and a radio frequency signal, and process the radio frequency signal. The antenna is mainly configured to receive and transmit a radio frequency signal in an electromagnetic wave form. The input/output apparatus, for example, a touchscreen, a display screen, or a keyboard, is mainly configured to receive data input by a user and output data to the user. It should be noted that, some types of devices may not have an input/output apparatus.

When data needs to be sent, after performing baseband processing on the to-be-sent data, the processor outputs a baseband signal to the radio frequency circuit, and the radio frequency circuit performs radio frequency processing on the baseband signal and then sends a radio frequency signal outward in an electromagnetic wave form via the antenna. When data is sent to the device, the radio frequency circuit receives a radio frequency signal via an antenna, converts the radio frequency signal into a baseband signal, and outputs the baseband signal to the processor. The processor converts the baseband signal into data, and processes the data. For ease of description, FIG. 14 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have transceiver functions may be considered as transceiver units of the apparatus, and the processor having a processing function may be considered as a processing unit of the apparatus. As shown in FIG. 14, the apparatus includes a transceiver unit 1410 and a processing unit 1420. The transceiver unit 1410 may also be referred to as a transceiver, a transceiver machine, a transceiver apparatus, or the like. The processing unit 1420 may also be referred to as a processor, a processing board, a processing module, a processing apparatus, or the like. Optionally, a component that is in the transceiver unit 1410 and that is configured to implement a receiving function may be considered as a receiving unit, and a component that is in the transceiver unit 1410 and that is configured to implement a transmit function may be considered as a sending unit. In other words, the transceiver unit 1410 includes the receiving unit and the sending unit. The transceiver unit 1410 sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that the transceiver unit 1410 is configured to perform a transmit operation and a receiving operation that are of the first terminal device in the foregoing method embodiments, and the processing unit 1420 is configured to perform an operation other than the transmit operation and the receiving operation that are of the first terminal device in the foregoing method embodiments. For example, in an implementation, the transceiver unit 1410 may be configured to perform a sending step and a receiving step that are in the embodiment shown in FIG. 6 or FIG. 10, and/or configured to support another process of the technology described in this specification. The processing unit 1420 may be configured to perform steps other than the receiving step or the sending step that are in the embodiment shown in FIG. 6 or FIG. 10, and/or configured to support another process of the technology described in this specification.

When the communication apparatus is an apparatus or a circuit in a category of chips, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes a network device and a plurality of terminal devices, or may further include more network devices and a plurality of terminal devices. For example, the communication system includes a network device and a terminal device, for example, a first terminal device that is configured to implement a related function in FIG. 6 or FIG. 10. The network device is separately configured to implement a part of functions of a related network in FIG. 6 or FIG. 10. The terminal device is configured to implement a function of a related terminal device, for example, the first terminal device in FIG. 6 or FIG. 10. For details, refer to the related descriptions in the method embodiments. Details are not described herein again.

An embodiment of this application further provides a computer-readable storage medium, including instructions; and when the instructions are run on a computer, the computer is enabled to perform the method performed by the network device in FIG. 6 or FIG. 10. Alternatively, when the instructions are run on a computer, the computer is enabled to perform the method performed by the first terminal device in FIG. 6 or FIG. 10.

An embodiment of this application further provides a computer program product, including instructions; and when the instructions are run on a computer, the computer is enabled to perform the method performed by the network device in FIG. 6 or FIG. 10. Alternatively, when the instructions are run on a computer, the computer is enabled to perform the method performed by the first terminal device in FIG. 6 or FIG. 10.

An embodiment of this application provides a chip system. The chip system includes a processor, may further include a memory, and is configured to implement the function of the first device or the second device in the foregoing method; or configured to implement functions of the network device and the terminal in the foregoing method. The chip system may include a chip, or may include a chip and another discrete component.

It should be understood that sequence numbers of the foregoing processes do not mean execution sequences in various embodiments of this application. The execution sequences of the processes should be determined based on functions and internal logic that are of the processes, and should not be construed as any limitation on the implementation processes of embodiments of this application.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on a particular application and a design constraint condition that of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiment described above is merely an example. For example, division of the units is merely division of logical functions and there may be another division in an actual implementation. For example, a plurality of units or components may be combined or integrated into another system, or some features may be ignored or not performed. In addition, the displayed or discussed mutual couplings or direct couplings or communication connections may be implemented using some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, in the technical solutions of this application, the part essentially making contributions, or the part of the technical solutions may be implemented in a form of a software product. The computer software product is stored in a storage medium, and includes several instructions, to enable a computer device (which may be a personal computer, a server, or a network device) to perform all or some of the steps of the methods described in embodiments of this application. The foregoing storage medium includes the following: any medium, for example, a USB flash drive, a removable hard disk drive, a read-only memory (read-only memory, ROM), a RAM, a magnetic disk, or an optical disc that can store program code.

It is clear that a person skilled in the art may make various modifications and variations to this application. This application is intended to cover these modifications and variations of this application provided that they fall within the scope of the following claims of this application and their equivalent technologies.

## Claims

1. A communication method, comprising:
measuring a second signal received on X1 first resources, wherein the second signal comprises an echo signal of a first signal, and the first signal is a signal sent by a first terminal device; and
sending a measurement result to a network device, wherein the measurement result indicates signal quality indication information of the second signal on Y1 first resources, Y1 is greater than or equal to 1, and the Y1 first resources belong to the X1 first resources.

2. The method according to claim 1, wherein the signal quality indication information comprises one or more of the following: a channel quality indicator, a signal power value, a signal-to-interference ratio, a signal-to-interference plus noise ratio, an interference level, or a sensing detection probability, and the sensing detection probability indicates a probability that the first terminal device detects a target.

3. The method according to claim 1 or 2, wherein the method further comprises:
receiving configuration information from the network device, wherein the configuration information indicates X2 second resources allocated to a second terminal device, the X2 second resources partially or completely overlap the X1 first resources, and X2 is greater than or equal to 1.

4. The method according to claim 3, wherein that the measurement result indicates signal quality indication information of the second signal on Y1 first resources comprises:
the measurement result comprises Z1 pieces of pairing information, wherein each piece of pairing information indicates one of the Y1 first resources and one of Y2 second resources, Y2 is greater than or equal to 1, the Y2 second resources belong to the X2 second resources, and Z1 is greater than or equal to 1.

5. The method according to any one of claims 1 to 4, wherein the method further comprises:
receiving second indication information from the network device, wherein the second indication information indicates at least one target first resource; and
sending the first signal on the at least one target first resource.

6. The method according to claim 5, wherein that the second indication information indicates at least one target first resource comprises:
the second indication information comprises an identifier of the at least one target first resource.

7. A communication method, comprising:
sending first indication information to a first terminal device, wherein the first indication information indicates the first terminal device to measure a second signal received on X1 first resources, the second signal comprises an echo signal of a first signal, and the first signal is a signal sent by the first terminal device;
receiving a measurement result from the first terminal device, wherein the measurement result indicates signal quality indication information of the second signal on Y1 first resources, Y1 is greater than or equal to 1, and the Y1 first resources belong to the X1 first resources; and
sending second indication information to the first terminal device, wherein the second indication information indicates at least one target first resource, the at least one target first resource is determined based on the signal quality indication information of the second signal on the Y1 first resources, and the at least one target resource is used by the first terminal device to send the first signal.

8. The method according to claim 7, wherein the signal quality indication information comprises one or more of the following: a channel quality indicator, a signal power value, a signal-to-interference ratio, a signal-to-interference plus noise ratio, an interference level, or a sensing detection probability, and the sensing detection probability indicates a probability that the first terminal device detects a target.

9. The method according to claim 7 or 8, wherein the method further comprises:
sending configuration information to the first terminal device, wherein the configuration information indicates X2 second resources allocated to a second terminal device, the X2 second resources partially or completely overlap the X1 first resources, and X2 is greater than or equal to 1.

10. The method according to claim 9, wherein that the measurement result indicates signal quality indication information of the second signal on Y1 first resources comprises:
the measurement result comprises Z1 pieces of pairing information, wherein each piece of pairing information indicates one of the Y1 first resources and one of Y2 second resources, Y2 is greater than or equal to 1, the Y2 second resources belong to the X2 second resources, and Z1 is greater than or equal to 1.

11. The method according to claim 9 or 10, wherein the method further comprises:
determining Z2 pieces of pairing information based on the measurement result, wherein each piece of pairing information indicates one of Y3 first resources and one of Y4 second resources, the Y3 first resources belong to the Y1 first resources, the Y4 second resources belong to the Y2 second resources, and Z2 is greater than or equal to 1.

12. The method according to claim 11, wherein that the second indication information indicates at least one target first resource comprises:
the second indication information comprises an identifier of a first resource indicated by each of the Z2 pieces of pairing information.

13. A communication apparatus, comprising: a processing module and a transceiver module, wherein
the processing module is configured to measure a second signal received on X1 first resources, wherein the second signal comprises an echo signal of a first signal, and the first signal is a signal sent by the communication apparatus; and
the transceiver module is configured to send a measurement result to a network device, wherein the measurement result indicates signal quality indication information of the second signal on Y1 first resources, Y1 is greater than or equal to 1, and the Y1 first resources belong to the X1 first resources.

14. The communication apparatus according to claim 13, wherein the transceiver module is further configured to receive configuration information from the network device, wherein the configuration information indicates X2 second resources allocated to a second terminal device, the X2 second resources partially or completely overlap the X1 first resources, and X2 is greater than or equal to 1.

15. The communication apparatus according to claim 13 or 14, wherein that the measurement result indicates signal quality indication information of the second signal on Y1 first resources comprises:
the measurement result comprises Z1 pieces of pairing information, wherein each piece of pairing information indicates one of the Y1 first resources and one of Y2 second resources, Y2 is greater than or equal to 1, the Y2 second resources belong to the X2 second resources, and Z1 is greater than or equal to 1.

16. A communication apparatus, comprising: a processing module and a transceiver module, wherein
the processing module is configured to generate first indication information, wherein the first indication information indicates a first terminal device to measure a second signal received on X1 first resources, the second signal comprises an echo signal of a first signal, and the first signal is a signal sent by the first terminal device;
the transceiver module is configured to send the first indication information to the first terminal device, and receive a measurement result from the first terminal device, wherein the measurement result indicates signal quality indication information of the second signal on Y1 first resources, Y1 is greater than or equal to 1, and the Y1 first resources belong to the X1 first resources; and
the transceiver module is further configured to send second indication information to the first terminal device, wherein the second indication information indicates at least one target first resource, the at least one target first resource is determined based on the signal quality indication information of the second signal on the Y1 first resources, and the at least one target resource is used by the first terminal device to send the first signal.

17. The communication apparatus according to claim 16, wherein the transceiver module is further configured to send configuration information to the first terminal device, wherein the configuration information indicates X2 second resources allocated to a second terminal device, the X2 second resources partially or completely overlap the X1 first resources, and X2 is greater than or equal to 1.

18. A communication apparatus, wherein the communication apparatus comprises a processor, a communication interface, and a memory, and the processor is coupled to the communication interface, and is configured to invoke computer instructions in the memory, to enable the communication apparatus to perform the method according to any one of claims 1 to 6.

19. A communication apparatus, wherein the communication apparatus comprises a processor, a communication interface, and a memory, and the processor is coupled to the communication interface, and is configured to invoke computer instructions in the memory, to enable the communication apparatus to perform the method according to any one of claims 7 to 12.

20. A computer-readable storage medium, wherein the computer-readable storage medium stores computer instructions; and when the computer instructions are executed, a computer is enabled to perform the method according to any one of claims 1 to 6, or the computer is enabled to perform the method according to any one of claims 7 to 12.
